# EUROPEAN PATENT APPLICATION

(11) **EP 4 425 937 A1**
(43) Date of publication of application: **04.09.2024**
(21) Application number: 22914786.3
(22) Date of filing: 27.12.2022
(51) Int. Cl.: H04N 21/43

(54) **MULTIMEDIA INFORMATION PROCESSING METHOD AND APPARATUS**

(30) Priority: 31.12.2021 CN 202111671942
(71) Applicant: Huawei Technologies Co., Ltd., Shenzhen, Guangdong 518129 (CN)
(72) Inventor: ZHAO, Hong, Shenzhen, Guangdong 518129 (CN); MA, Shanghua, Shenzhen, Guangdong 518129 (CN)
(74) Representative: MERH-IP Matias Erny Reichl Hoffmann Patentanwälte PartG mbB
(86) International application number: PCT/CN2022/142320
(87) International publication number: WO 2023/125533

(57) **Abstract**

This application provides a multimedia information processing method and an apparatus, and relates to the field of communication technologies. In the multimedia information processing method, after accessing a first conference, a first device may output multimedia information from a second device; and the first device may stop outputting the multimedia information from the second device if the first device determines that a person in a capture range of a video capture apparatus associated with the first device meets a set condition. In this way, the output of the multimedia information is automatically stopped, so that an operation is simplified, and efficiency of processing the multimedia information is improved.

## Description

### TECHNICAL FIELD

This application relates to the field of communication technologies, and in particular, to a multimedia information processing method and an apparatus.

### BACKGROUND

With continuous development of communication technologies, a plurality of technologies that can be used to implement multimedia information exchange between devices gradually emerge. For example, a conference technology means that multimedia information captured by a plurality of devices can be remotely shared. For another example, a projection technology means that one device may project multimedia information displayed by the device to another device.

In a process of interaction between devices, if a user participating in this interaction at one device temporarily leaves, the user may perform, on the device, an operation of disabling multimedia information, and the device may stop outputting the multimedia information. If the user participating in this interaction returns to the site, the user needs to perform, on the device again, an operation of enabling the multimedia information, and the device starts to output the multimedia information again. It can be learned that currently, output of the multimedia information is controlled in a manual manner, causing a complex operation process.

### SUMMARY

Embodiments of this application provide a multimedia information processing method and an apparatus, to simplify an operation process and improve efficiency of controlling multimedia information.

According to a first aspect, an embodiment of this application provides a multimedia information processing method. The method may be performed by a first device, and the first device is, for example, a personal computer or a mobile phone. The method includes: The first device accesses a first conference, and outputs multimedia information from a second device. The first device stops outputting the multimedia information if a person in a first range meets a set condition,, where the first range includes a capture range of a video capture apparatus associated with the first device when the first device accesses the first conference.

In this embodiment of this application, after the first device accesses the first conference, if the first device determines that a person in the capture range of the video capture apparatus associated with the first device meets the set condition, the first device may automatically stop outputting the multimedia information from the second device without manual intervention of a user, thereby simplifying an operation process of the user, improving efficiency of controlling the multimedia information, and helping improve user experience. In addition, the first device automatically stops the multimedia information from the second device. This helps reduce a risk of multimedia information leakage in time, thereby improving security of interaction between devices. In addition, the first device may selectively stop outputting the multimedia information from the second device. This helps reduce power consumption of the first device.

In a possible implementation, the set condition includes: A quantity of persons in the first range is a first quantity; some of persons in the first range are not persons scheduled to attend the first conference or none of persons in the first range is a person scheduled to attend the first conference; duration in which a quantity of persons in the first range is a first quantity reaches first set duration; or duration in which some of persons in the first range are not persons scheduled to attend the first conference or none of persons in the first range is a person scheduled to attend the first conference reaches first set duration.

In this implementation, if the first device determines that the quantity of persons in the first range is the first quantity, it indicates that there is a small quantity of persons in the first range, and the first device may stop outputting the multimedia information from the second device. In this way, for one thing, the multimedia information from the second device can be prevented from being illegally eavesdropped, and for another, a case of an invalid output of the first device can be avoided (where the invalid output may be understood as that the first device outputs the multimedia information but no one views the multimedia information). Alternatively, if the first device determines that some of the persons in the first range are not the persons scheduled to attend the first conference or none of the persons in the first range is the person scheduled to attend the first conference, it indicates that an unauthorized person who does not schedule the first conference exists in the first range, and the first device may stop outputting the multimedia information from the second device, thereby reducing the risk of the multimedia information leakage. Alternatively, after determining that the quantity of persons in the first range is the first quantity, the first device further continuously determines whether the quantity of persons in the first range within the first set duration is the first quantity. In this way, a case in which the person temporarily leaves the first device but the first device stops outputting the multimedia information is avoided. This avoids a case in which the first device frequently stops outputting the multimedia information, and helps improve user experience. Alternatively, after determining that some of the persons in the first range are not the persons scheduled to attend the first conference or none of the persons in the first range is the person scheduled to attend the first conference, the first device further continuously detects, within the first set duration, whether some or all of the persons in the first range are the persons scheduled to attend the first conference. This may also reduce a quantity of times that the first device stops outputting the multimedia information, thereby improving user experience.

In a possible implementation, the second device is a device that has accessed the first conference.

In this implementation, both the first device and the second device are devices that access the first conference. When determining that the person in the first range meets the set condition, the first device stops outputting the multimedia information from the second device, thereby ensuring security of multimedia information exchange between devices in a conference scenario.

In a possible implementation, if the first device determines, based on a video that is in the first range and that is captured by the video capture apparatus associated with the first device, that the person in the first range does not meet the set condition, the first device resumes outputting the multimedia information.

In this implementation, after the first device stops outputting the multimedia information, the first device may continue to detect whether the person in the first range meets the set condition. If the person in the first range does not meet the set condition, the first device may resume outputting the multimedia information. This provides a mechanism for automatically resuming outputting the multimedia information. In addition, no manual operation is required. This, for one thing, can improve user experience, and for another, helps improve the efficiency of controlling the multimedia information.

In a possible implementation, the method further includes: If noise in a capture range of an audio capture apparatus associated with the first device reaches an upper limit of noise, the first device does not send, to the second device, audio information captured by the audio capture apparatus associated with the first device.

In this implementation, the first device is further associated with the audio capture apparatus. The audio capture apparatus is, for example, a microphone. When determining that the noise in the capture range corresponding to the audio capture apparatus associated with the first device is excessively large, the first device may stop sending the corresponding audio information to the second device, so that the audio information sent by the first device is prevented from causing interference to a person attending a conference at the second device.

In a possible implementation, the method further includes: If duration in which the first device stops outputting the multimedia information reaches second set duration, the first device exits the first conference. Alternatively, if duration in which the person in the first range meets the set condition reaches second set duration, the first device exits the first conference.

In this implementation, when the first device stops outputting the multimedia information, or when the first device determines that the person in the first range meets the set condition, timing is started, and when timing duration reaches the second set duration, the first device may exit the first conference. This provides a manner in which the first device automatically exits the conference, thereby simplifying a user operation and improving user experience. It should be noted that, if the first device starts timing when the person in the first range meets the set condition, a value of the second set duration should be greater than a value of the first set duration.

In a possible implementation, the first device captures the video in the first range by using the video capture apparatus associated with the first device, and the first device determines that a quantity of human bodies included in the video is the quantity of persons in the first range.

In this implementation, the first device identifies the human body in the video in the first range, to determine the quantity of persons in the first range. A manner of determining the quantity of persons in the first range is simple and direct.

In a possible implementation, the video capture apparatus associated with the first device includes a first video capture apparatus and a second video capture apparatus, where a capture range of the second video capture apparatus is larger than a capture range of the first video capture apparatus. That the first device determines that a quantity of human bodies included in the first video is the quantity of persons in the first range includes: If the quantity of human bodies included in the first video is the first quantity, the first device determines that a quantity of human bodies included in a second video that is in the first range and that is captured by the second video capture apparatus is the quantity of persons in the first range, where the first video is a video that is in the first range and that is captured by the first video capture apparatus.

In this implementation, when the first device determines that the quantity of human bodies in the first video captured by the first video capture apparatus is the first quantity, the first device determines the quantity of human bodies in the second video captured by the second video capture apparatus, and determines the quantity of human bodies in the second video as the quantity of persons in the first range. This is equivalent to verifying again whether the quantity of persons in the first range is the first quantity, to ensure reliability of the determined quantity of persons in the first range.

In a possible implementation, the first device pre-stores an identifier of a third device, where the third device is a device associated with the person scheduled to attend the first conference. The method includes: The first device sends a message to the third device in a short-range communication manner, where the message is for requesting to obtain the identifier of the third device. That the first device stops outputting the multimedia information if a person in a first range meets a set condition includes: If the person in the first range meets the set condition and the identifier of the third device is not received, the first device stops outputting the multimedia information.

In this implementation, after accessing the first conference, the first device may determine, through short-range communication, whether the third device is in the first range. If it is detected that the third device is not in the first range, and the person in the first range meets the set condition, it indicates that there is a higher probability that the person scheduled to attend the first conference is not in the first range, and the first device may quickly stop outputting the multimedia information from the second device, to avoid the invalid output of the first device to a maximum extent, and reduce the risk of the multimedia information leakage.

In a possible implementation, the first device outputs projection information from a fourth device. After exiting the first conference, the first device determines, based on the video captured by the video capture apparatus associated with the first device, that projection is paused, and the first device stops outputting the projection information from the fourth device.

In this implementation, after exiting the first conference, the first device may determine, based on the video captured by the video capture apparatus associated with the first device, whether the projection is paused. For example, if the first device determines that a quantity of persons in the video is a second quantity, or the first device determines that duration in which a quantity of persons in the video is a second quantity reaches specific duration, the first device determines that the projection is paused. In this case, the first device may stop outputting the projection information from the fourth device. This provides a manner of automatically pausing the projection, to reduce the user operation. In addition, for one thing, the invalid output of the first device is avoided, and for another, a risk of illegal leakage of the projection information is also reduced.

In a possible implementation, if a difference between a quantity of persons entering the first range and a quantity of persons exiting the first range is equal to the quantity of persons in the first range, the first set duration is first duration. If a difference between a quantity of persons entering the first range and a quantity of persons exiting the first range is greater than the quantity of persons in the first range, the first set duration is second duration. The first duration is less than the second duration.

In this implementation, the first device may count the difference between the quantity of persons entering the first range and the quantity of persons exiting the first range, and verify the determined quantity of persons in the first range. If the difference is equal to the determined quantity of persons in the first range, it indicates that accuracy of the determined quantity of persons in the first range is high. Therefore, the first device may set the value of the first set duration to a small value, to ensure that the first device can stop outputting the multimedia information as soon as possible. If the difference is not equal to the determined quantity of persons in the first range, it indicates that accuracy of the determined quantity of persons in the first range is small. Therefore, the first device may set the value of the first set duration to a large value, so that the first device may continue to determine the quantity of persons in the first range within the duration, to avoid a case in which the first device stops outputting the multimedia information due to misjudgment.

In a possible implementation, before the first device stops outputting the multimedia information of the second device, the method further includes: The first device determines information about an exit in the first range. The first device detects movement track information of the person in the first range. The first device determines the difference based on the movement track information of the person in the first range and the information about the exit.

In this implementation, based on the movement track information of the person in the first range, the first device determines the difference by using the exit in the first range as a reference, and automatically counts the difference. Because the difference is a statistical result of specific duration, reliability of the difference is higher.

In a possible implementation, that the first device determines information about an exit in the first range includes: If a similarity between an environmental image corresponding to a second range and an environmental image corresponding to the first range is greater than a preset value, the first device determines that information about an exit in the second range is the information about the exit in the first range, where the information about the exit in the second range is determined based on movement track information of a person corresponding to at least one second conference, each of the at least one second conference is a conference that is accessed before the first device accesses the first conference, and the second range is a capture range of a video capture apparatus associated with the first device when the first device accesses some or all of the at least one second conference.

In this implementation, the first device may determine, based on the information about the exit in the second range corresponding to the previously accessed second conference, the information about the exit in the first range corresponding to the currently accessed first conference. The information about the exit in the second range is obtained by using the movement track information of the person after the at least one second conference ends, so that accuracy of the determined information about the exit in the second range is higher, and accuracy of determining the information about the exit in the first range is improved.

In a possible implementation, the set condition is associated with a conference type of the first conference, where the conference type of the first conference includes an open conference, a semi-privacy conference, or a full-privacy conference.

In this implementation, the set condition may be determined based on the conference type of the first conference. For example, the first device pre-stores a set condition associated with each of at least one conference type, and after determining the conference type of the first conference, the first device may determine the set condition corresponding to the conference type. The set condition associated with each of the at least one conference type includes, for example, that a set condition associated with the open conference is that the quantity of persons in the first range is the first quantity, a set condition corresponding to the semi-privacy conference is that none of the persons in the first range is the person scheduled to attend the first conference, and a set condition corresponding to the full-privacy conference is that some of the persons in the first range are not the persons scheduled to attend the first conference. Alternatively, for example, a set condition corresponding to the open conference is that the duration in which the quantity of persons in the first range is the first quantity is the first set duration, a set condition corresponding to the semi-privacy conference is that the duration in which none of the persons in the first range is the person scheduled to attend the first conference reaches the first set duration, and a set condition corresponding to the full-privacy conference is that the duration in which some of the persons in the first range are not the persons scheduled to attend the first conference is the first set duration.

In a possible implementation, the multimedia information is displayed in a first window of the first device. That the first device stops outputting the multimedia information includes skipping displaying the multimedia information in the first window. The method further includes: The first device shrinks the first window.

In this implementation, the first device displays the multimedia information from the second device by using the first window. After the first device stops outputting the multimedia information from the second device, the first window does not display the multimedia information, so that a window resource can be released in time. In addition, the first device shrinks the first window, so that the first window can be prevented from occupying an excessive display area of the first device, thereby improving user experience.

According to a second aspect, an embodiment of this application provides a multimedia information processing method. The method may be performed by a first device. For an implementation of the first device, refer to the foregoing descriptions. The method includes: The first device outputs projection information from a second device when the first device does not access any conference. The first device determines, based on a video captured by a video capture apparatus associated with the first device, that projection is paused, and the first device stops outputting the projection information from the second device.

The solution in this embodiment of this application is applicable to a projection scenario. When the first device does not access any conference, the first device is used as a projected device, and the second device is used as a projection device. The first device determines, based on the video captured by the video capture apparatus associated with the first device, whether the projection needs to be paused. For example, if the first device determines that a quantity of persons in the video is equal to a second quantity, the first device determines that the projection is paused. Alternatively, for example, if the first device determines that duration in which a quantity of persons in the video is equal to a second quantity reaches first set duration, the first device may automatically stop outputting the projection information from the second device, and no manual pausing is required, thereby reducing an operation of the person. In addition, the first device stops the projection information from the second device. This helps reduce a risk of projection information leakage.

According to a third aspect, an embodiment of this application provides a multimedia information processing apparatus. The multimedia information processing apparatus may be the first device in the first aspect, an electronic device (for example, a chip system) disposed in the first device, or a large device including the first device. The first device includes a corresponding means (means) or module configured to perform any one of the first aspect or the optional implementations. For example, the multimedia information processing apparatus includes a transceiver module (sometimes also referred to as a transceiver unit) and a processing module (sometimes also referred to as a processing unit).

For example, the transceiver module is configured to access a first conference. For example, the transceiver module interacts with a server of a conference-type application to access the first conference. The processing module is configured to: output multimedia information from a second device, and stop outputting the multimedia information if a person in a first range meets a set condition, where the first range includes a capture range of a video capture apparatus associated with the first device when the first device accesses the first conference.

In an optional implementation, the multimedia information processing apparatus further includes a storage module. The processing module can be coupled to the storage module, and execute a program or instructions in the storage module, to enable the multimedia information processing apparatus to perform a function of the first device in the first aspect.

According to a fourth aspect, an embodiment of this application provides a multimedia information processing apparatus. The multimedia information processing apparatus may be the first device in the second aspect, an electronic device (for example, a chip system) disposed in the first device, or a large device including the first device. The first device includes a corresponding means (means) or module configured to perform any one of the second aspect or the optional implementations. For example, the multimedia information processing apparatus includes a processing module (sometimes also referred to as a processing unit). Optionally, the multimedia information processing apparatus further includes a transceiver module (sometimes also referred to as a transceiver unit).

For example, the processing module is configured to: output projection information from a second device when no conference is accessed, and determine, based on a video captured by a video capture apparatus associated with the first device, that projection is paused, so that the first device stops outputting the projection information from the second device. The transceiver module, for example, is configured to receive the projection information from the second device.

In an optional implementation, the multimedia information processing apparatus further includes a storage module. The processing module can be coupled to the storage module, and execute a program or instructions in the storage module, to enable the multimedia information processing apparatus to perform a function of the first device in the second aspect.

According to a fifth aspect, an embodiment of this application provides a multimedia information processing device. The multimedia information processing device includes a processor, where the processor is coupled to a memory, and is configured to execute instructions in the memory, to implement the method performed by the first device in the first aspect or the implementations. Optionally, the communication apparatus further includes another component, for example, an antenna, an input/output module, and an interface. The components may be hardware, software, or a combination of software and hardware.

According to a sixth aspect, an embodiment of this application provides a multimedia information processing device. The multimedia information processing device includes a processor, where the processor is coupled to a memory, and is configured to execute instructions in the memory, to implement the method performed by the first device in the second aspect or the implementations. Optionally, the communication apparatus further includes another component, for example, an antenna, an input/output module, and an interface. The components may be hardware, software, or a combination of software and hardware.

According to a seventh aspect, an embodiment of this application provides a computer-readable storage medium. The computer-readable storage medium is configured to store a computer program. When the computer program is run on a computer, the computer is enabled to perform the method according to either of the first aspect and the second aspect.

According to an eighth aspect, an embodiment of this application provides a computer program product. The computer program product stores a computer program, where the computer program includes program instructions. When the program instructions are executed by a computer, the computer is enabled to perform the method according to either of the first aspect and the second aspect.

According to a ninth aspect, this application provides a chip system. The chip system includes a processor, and may further include a memory, configured to implement the method according to either of the first aspect and the second aspect. The chip system may include a chip, or may include a chip and another discrete device.

For beneficial effects of the third aspect to the ninth aspect and the implementations of the third aspect to the ninth aspect, refer to descriptions of beneficial effects of the method and the implementations of the method according to either of the first aspect and the second aspect.

### BRIEF DESCRIPTION OF DRAWINGS

FIG. 1A is a schematic diagram of a conference scenario to which an embodiment of this application is applicable;
FIG. 1B is a schematic diagram of a projection scenario to which an embodiment of this application is applicable;
FIG. 2 is a schematic flowchart 1 of a multimedia information processing method according to an embodiment of this application;
FIG. 3 is a schematic flowchart of determining a quantity of persons in a first range according to an embodiment of this application;
FIG. 4 is a schematic flowchart of determining a difference between a quantity of persons entering a first range and a quantity of persons exiting the first range according to an embodiment of this application;
FIG. 5 is a schematic diagram of a process of determining information about an exit in a second range according to an embodiment of this application;
FIG. 6 is a schematic flowchart 2 of a multimedia information processing method according to an embodiment of this application;
FIG. 7 is a schematic diagram of a process in which a first device stops outputting multimedia information according to an embodiment of this application;
FIG. 8 is a flowchart of a method for pausing projection according to an embodiment of this application;
FIG. 9 is a schematic diagram of an interface change of a first device in a projection process according to an embodiment of this application;
FIG. 10 is a schematic flowchart 3 of a multimedia information processing method according to an embodiment of this application;
FIG. 11 is a schematic diagram 1 of a structure of a multimedia information processing apparatus according to an embodiment of this application;
FIG. 12 is a schematic diagram 2 of a structure of a multimedia information processing apparatus according to an embodiment of this application;
FIG. 13 is a schematic diagram 3 of a structure of a multimedia information processing apparatus according to an embodiment of this application;
FIG. 14 is a schematic diagram 1 of a structure of a multimedia information processing device according to an embodiment of this application; and
FIG. 15 is a schematic diagram 2 of a structure of a multimedia information processing device according to an embodiment of this application.

### DESCRIPTION OF EMBODIMENTS

To make objectives, technical solutions, and advantages of this application clearer, the following further describes this application in detail with reference to accompanying drawings. A specific operation method in a method embodiment may also be applied to an apparatus embodiment or a system embodiment.

The following describes some terms in embodiments of this application, to facilitate understanding of a person skilled in the art.
1. Multimedia information in embodiments of this application is media information presented in a specific representation form. The representation form is, for example, one or more of a text, an image, a video, audio, a bullet screen, a shared interface, or a projection interface. Correspondingly, the multimedia information includes, for example, one or more of video information, audio information, image information, text information, bullet screen information, shared interface information, or projection information.
2. A first range in embodiments of this application may also be referred to as a first site, and is a capture range of a video capture apparatus associated with a first device when the first device accesses a first conference. The capture range of the video capture apparatus is a set of spatial ranges that can be captured by the video capture apparatus. The video capture apparatus associated with the first device is a video capture apparatus that can perform data exchange with the first device, for example, including a video capture apparatus disposed on the first device, and/or a video capture apparatus that is disposed independently of the first device but can communicate with the first device. The video capture apparatus is, for example, a camera lens, a video camera, or a camera. For example, the video capture apparatus associated with the first device includes a first video capture apparatus disposed on the first device, and includes a second video capture apparatus disposed independently of the first device. In this case, the first range may include a capture range of the first video capture apparatus and a capture range of the second video capture apparatus.
3. A second range in embodiments of this application is a capture range of a video capture apparatus associated with the first device when the first device accesses a second conference. The second conference is a general name of a conference that is accessed by the first device before the first device accesses the first conference. For example, the first device accesses a conference B and a conference C before accessing a conference A. For example, the conference A is the first conference. In this case, both the conference B and the conference C may be considered as the second conference. Optionally, when the first device accesses the first conference and the second conference, if video capture apparatuses associated with the first device do not change (for example, a location and a quantity of video capture apparatuses associated with the first device do not change), the first range is the same as the second range.
4. An application program (application, APP) in embodiments of this application may be referred to as an application for short, and is a software program that can implement one or more specific functions. Generally, a plurality of applications, for example, a conference-type application or a projection-type application, may be installed in a device. The conference-type application includes, for example, Huawei Cloud Meeting. The application mentioned in the following embodiments may be an application that has been installed when the device is delivered from a factory, or may be an application downloaded from a network or obtained from another device by a user in a process of using the device.

In embodiments of this application, unless otherwise specified, a quantity of nouns indicates "a singular noun or a plural noun", that is, "one or more". "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one item (piece) of a, b, or c indicates: a, b, c, a and b, a and c, b and c, or a, b, and c, where a, b, and c may be singular or plural.

Unless otherwise specified, ordinal numbers such as "first" and "second" mentioned in embodiments of this application are used to distinguish between a plurality of objects, and are not used to limit a sequence, a time sequence, a priority, or importance of the plurality of objects. For example, the "first device" and a "second device" in embodiments of this application are used to represent two devices, and are not used to limit importance of the two devices.

To simplify an operation, an embodiment of this application provides a multimedia information processing solution. In this solution, after accessing a first conference, a first device may output multimedia information from a second device. If the first device detects that a person in a first range meets a set condition, the first device may automatically stop outputting the multimedia information from the second device. For a meaning of the first range, refer to the foregoing descriptions. In other words, in this solution, the first device may selectively stop outputting the multimedia information from the second device based on a specific situation of the person in the first range, thereby reducing an operation of the person and reducing a risk of leakage of the multimedia information from the second device. This helps improve security of interaction between devices. In addition, the first device stops outputting the multimedia information from the second device. This helps reduce power consumption of the first device.

With reference to the accompanying drawings, the following describes scenarios to which the multimedia information processing solution provided in this embodiment of this application is applicable.

### 1. First application scenario:

The first application scenario is a conference scenario. In the conference scenario, a plurality of devices that access a same conference are included. Each device in all or some of the plurality of devices may capture multimedia information, and send the multimedia information to a device other than the device in the plurality of devices, to implement multimedia information exchange. To simplify description, an example in which the plurality of devices include a first device and a second device is used in this embodiment of this application. In the conference scenario, the first device and the second device can perform multimedia information exchange. To be specific, the first device or the second device may capture multimedia information, and may send the multimedia information to a device other than the device in the plurality of devices. The first device or the second device includes but is not limited to a personal computer (for example, a desktop computer or a notebook computer), a tablet computer, a mobile phone, a server with a display function, a wearable device, a smart screen, a dedicated conference terminal (where for example, the conference terminal includes a camera lens and a microphone), or the like. An implementation of the first device or the second device is not limited in this embodiment of this application.

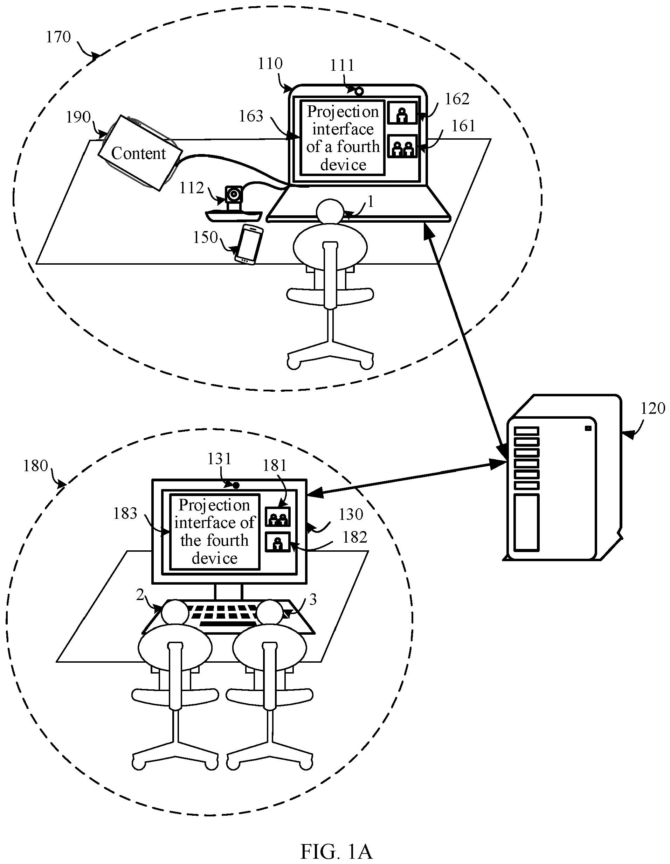

FIG. 1A is a schematic diagram of a conference scenario to which an embodiment of this application is applicable. FIG. 1A may alternatively be understood as a schematic diagram of performing a remote conference between a first device and a second device.

As shown in FIG. 1A, the application scenario includes a first device 110, a first server 120, and a second device 130. The first device 110 and the second device 130 access a same conference, and the first server 120 may provide a corresponding resource (for example, a computing resource and/or a bandwidth resource) for the conference. Optionally, each of the first device 110 and the second device 130 may be installed with a same application, for example, a conference-type application. In this case, the first server 120 is a background server corresponding to the conference-type application.

The first device 110 may send, by using the first server 120, multimedia information obtained by the first device 110 to the second device 130. Similarly, the second device 130 may send, by using the first server 120, multimedia information obtained by the second device 130 to the first device 110. In this way, multimedia information exchange between the first device 110 and the second device 130 is implemented.

That the multimedia information includes video information is used as an example. In this embodiment of this application, a device attending the conference may capture and share the video information. For example, the device attending the conference has an associated video capture apparatus, so that the video information can be captured. For example, the first device 110 captures a video in a first range 170 by using a video capture apparatus associated with the first device 110. Correspondingly, the first device 110 may obtain video information corresponding to the video. FIG. 1A includes a plurality of video capture apparatuses, for example, a first video capture apparatus 111 disposed in the first device 110, and a second video capture apparatus 112. The second video capture apparatus 112 is disposed independently of the first device 110 but can communicate with the first device 110. For example, the video capture apparatus associated with the first device 110 includes the first video capture apparatus 111 and the second video capture apparatus 112. In this case, the video information obtained by the first device 110 includes video information (for example, referred to as first video information) corresponding to a video (for example, referred to as a first video) captured by the first video capture apparatus 111, and video information (for example, referred to as second video information) of a video (for example, referred to as a second video) captured by the second video capture apparatus 112. The first range 170 is a capture range corresponding to the video capture apparatus associated with the first device 110. For example, the video capture apparatus associated with the first device 110 includes the first video capture apparatus 111 and the second video capture apparatus 112. In this case, the first range 170 includes a capture range of the first video capture apparatus 111 and a capture range of the second video capture apparatus 112. For an implementation of the video capture apparatus, refer to the foregoing descriptions. Optionally, the capture range of the second video capture apparatus 112 is larger than the capture range of the first video capture apparatus 111. Optionally, the second video capture apparatus 112 is disposed on a pan-tilt-zoom (not separately shown in FIG. 1A), and the pan-tilt-zoom may drive the second video capture apparatus 112 to rotate. Alternatively, the second video capture apparatus 112 may be coupled to the pan-tilt-zoom.

The first device 110 sends the first video information and/or the second video information to the second device 130 by using the first server 120. Optionally, the second device 130 may output a video corresponding to the received video information.

A video capture apparatus associated with the second device 130 includes, for example, a third video capture apparatus 131 in FIG. 1A. The third video capture apparatus 131 may capture a video (for example, referred to as a third video) in a third range 180, and the second device 130 may obtain video information (for example, referred to as third video information) corresponding to the third video. The third range 180 is a capture range corresponding to the video capture apparatus associated with the second device 130. For example, the video capture apparatus associated with the second device 130 includes only the third video capture apparatus 131. In this case, the third range 180 is a capture range of the third video capture apparatus 131. The second device 130 sends the third video information to the first server 120, and the first server 120 sends the third video information to the first device 110.

For example, after receiving the third video information from the second device 130, the first device 110 may output the third video in a first window 161. For example, a face image of a person 2 and a face image of a person 3 that are displayed in the first window 161 in FIG. 1A are content of the third video. Optionally, the second device 130 may alternatively display the third video in a second window 181. Similarly, after receiving the first video information and/or the second video information from the first device 110, the second device 130 may output the videos/video corresponding to the first video information and/or the second video information. For example, a face image of a person 1 displayed in a third window 182 in FIG. 1A is content of the videos/video. Optionally, the first device 110 may alternatively display, in a fourth window 162, the videos/video corresponding to the first video information and/or the second video information.

That the multimedia information includes audio information is used as an example. In this embodiment of this application, the device attending the conference may capture and share the audio information. For example, the device attending the conference has an associated audio capture apparatus, so that the audio information can be captured. The first device 110 is used as an example for description. The first device 110 is further associated with an audio capture apparatus (not separately shown in FIG. 1A). The first device 110 captures audio information by using the audio capture apparatus associated with the first device 110. The audio information is in a capture range corresponding to the audio capture apparatus associated with the first device 110. For a meaning of the audio capture apparatus associated with the first device 110, refer to content of the video capture apparatus associated with the first device 110 described above. Optionally, the audio capture apparatus and the video capture apparatus may be two apparatuses disposed independently of each other. Alternatively, the audio capture apparatus and the video capture apparatus are a same apparatus. In this case, the capture range corresponding to the audio capture apparatus associated with the first device 110 is the first range. For example, if both the video capture apparatus and the audio capture apparatus that are associated with the first device 110 are the first video capture apparatus 111, the capture range of the first video capture apparatus 111 is the first range, and is also the capture range corresponding to the audio capture apparatus associated with the first device 110.

In a possible implementation, the first device 110 may further communicate with a second server (not separately shown in FIG. 1A), and the second server is configured to process data from the first device 110, to reduce a processing amount of the first device. For example, the first device 110 may be configured to, for example: detect a situation of a person in the first range, and feed back the situation of the person in the first range to the first device. The first device may control, based on the situation of the person in the first range, output of the multimedia information from the second device 130. The manner of detecting the situation of the person in the first range is described below. Similarly, the second device 130 may also communicate with the second server.

In the conference scenario, generally, a person attending a first conference further carries a device (collectively referred to as a third device 150 in this embodiment of this application) used by the person. In this case, the first device 110 may further communicate with the third device 150, to verify an identity of the person attending the first conference, determine whether the person is still in the first range, or the like. For example, still refer to FIG. 1A. The third device 150 is a device associated with the person 1, and the third device 150 is, for example, a handheld device (for example, a mobile phone) or a wearable device (for example, a watch or a band).

In the conference scenario, sharing of screen content (where the screen content herein is a part other than the multimedia information displayed by the device in the conference scenario, for example, content displayed by the first device other than the multimedia information that is captured by the first device and that is displayed by the first device and the multimedia information captured by the second device) may be further involved. The first device 110 is used as an example. Screen content displayed by the first device 110 may be provided by the first device 110, may be a shared interface shared by the second device 130, or may be provided by a fourth device 190. Still refer to FIG. 1A. The fourth device 190 is used as a projection source, and may also be referred to as an active projection device or a screen transmitting end. The fourth device 190 is a device with a communication function, for example, a mobile phone, a desktop computer, a notebook computer, a tablet computer, or a wearable device. The first device 110 is used as a projected device, and may also be referred to as a screen receiving end. The fourth device 190 may send projection information of the fourth device 190 to the first device 110, so that the first device 110 displays a projection interface corresponding to the projection information. As shown in FIG. 1A, the fourth device 190 displays corresponding content, and the fourth device 190 may perform projection, so that the first device 110 outputs the projection interface of the fourth device 190. For example, the first device 110 displays the projection interface of the fourth device 190 in a fifth window 163.

It should be noted that, in FIG. 1A, direct communication between the first device 110 and the fourth device 190 is used as an example. Alternatively, the first device 110 and the fourth device 190 exchange projection information by using another server (not separately shown in FIG. 1A). For example, the first device 110 and the second device 130 may be installed with a same projection-type application. A third server is different from the foregoing first server 120, and the third server is a background server corresponding to the projection-type application.

Optionally, the second device 130 may alternatively be used as a projected device. For example, the fourth device 190 may further perform projection on the second device 130, so that the second device 130 also displays the projection interface of the fourth device 190. Alternatively, the first device 110 may share the projection interface of the fourth device 190 with the second device 130 by using a screen sharing technology. For example, still refer to FIG. 1A. The first device 110 displays the projection interface of the fourth device 190, and screen sharing is performed between the first device 110 and the second device 130. In this case, the second device 130 may also display the projection interface of the fourth device 190 in a sixth window 183.

The foregoing describes processes of exchanging the video information, the audio information, and the screen content between the first device 110 and the second device 130 in the conference scenario. In addition, in the conference scenario, other multimedia information exchange may be further performed between the first device 110 and the second device 130. Other multimedia information is, for example, text information and/or picture information. For an exchange process, refer to the foregoing exchange process of the video information or the audio information.

It should be noted that, in FIG. 1A, an example in which the first device 110 and the second device 130 access the same conference is used. If another device accesses the conference, the first device 110 may further output multimedia information from the another device. The another device is a device other than the first device 110 and the second device 130.

FIG. 1A shows an example in which the first device 110 is a notebook computer, the second device 130 is a desktop computer, the third device 150 is a tablet computer, and the fourth device 190 is a mobile phone. An implementation form of the first device 110, the second device 130, the third device 150, or the fourth device 190 is not limited in this embodiment of this application. In addition, in FIG. 1A, an example in which there is one first server 120 is used. Actually, a quantity of first servers 120 is not limited. The first server 120 may be a virtual server or a physical server. This is not limited in this embodiment of this application either. Similarly, there may also be one or more second servers and third servers, and the second server and the third server may also be virtual servers or physical servers.

### 2. Second application scenario:

The second application scenario is a projection scenario. Different from the first device in the projection process in FIG. 1A, in the projection scenario, the first device may not need to access any conference. The projection scenario includes the first device and the second device. The second device is used as a transmitting end, and may also be referred to as an active projection device or a projection source. The first device is used as a receiving end, and may also be referred to as a projected device. The second device may send projection information displayed by the second device to the first device for display. It should be noted that roles of the first device and the second device are interchangeable. For example, the first device may also perform projection on the second device. In the projection scenario, the first device is a device with a display function, for example, a desktop computer, a notebook computer, a tablet computer, or a mobile phone. The second device is a device with a communication function, for example, a desktop computer, a notebook computer, a tablet computer, a mobile phone, or a wearable device.

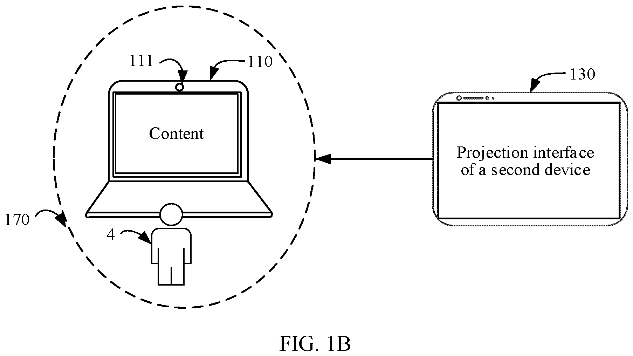

FIG. 1B is a schematic diagram of a projection scenario to which an embodiment of this application is applicable, and may alternatively be understood as a schematic diagram of a process in which a second device performs projection on a first device. As shown in FIG. 1B, the scenario includes a first device 110 and a second device 130. The first device 110 corresponds to a person 4. In other words, the person 4 views projection information from the second device by using the first device 110.

For example, the second device 130 displays corresponding content, and the second device 130 may perform projection, so that the first device 110 displays a projection interface of the second device 130.

In a possible implementation, in FIG. 1B, the first device 110 and the second device 130 may directly communicate with each other. Alternatively, the first device 110 and the second device 130 exchange projection information by using a first server (not shown in FIG. 1B). For example, the first device 110 and the second device 130 may be installed with a same projection-type application, and the first server is a background server of the projection-type application. For a process in which the first device 110 and the second device 130 exchange the projection information by using the server, refer to content described in FIG. 1A.

In a possible implementation, the first device 110 may also communicate with a second server. For a function and a meaning of the second server, refer to the foregoing content of the second server. Details are not listed herein again.

It should be noted that, in this embodiment of this application, an example in which the first device 110 is a notebook computer and the second device 130 is a tablet computer is used for description. Actually, implementation forms of the first device and the second device are not limited.

The multimedia information processing method in this embodiment of this application is applicable to the scenario shown in FIG. 1A or FIG. 1B described above. The following describes the multimedia information processing method in this embodiment of this application by using an example in which the method is applied to the scenario shown in FIG. 1A.

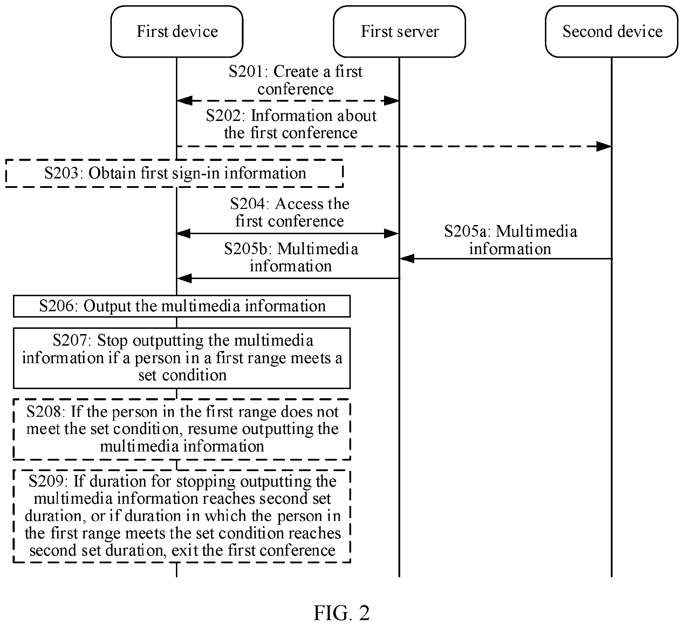

FIG. 2 is a flowchart of a multimedia information processing method according to an embodiment of this application. It should be noted that a first device shown in FIG. 2 is, for example, the first device shown in FIG. 1A, a second device is, for example, the second device shown in FIG. 1A, a first server is, for example, the first server shown in FIG. 1A, and a second server is, for example, the second server mentioned above. Unless otherwise specified, a user in this embodiment of this application is a general name of a person, for example, a person 1, a person 2, or a person 3.

S201: The first server creates a first conference.

The first server receives a first request from the first device, and generates information about the first conference based on the first request. This is equivalent to creating a conference corresponding to the first request. The first request is for requesting to create the conference. In this embodiment of this application, that the created conference is the first conference is used as an example.

For example, the user may perform, on the first device, an operation for creating the conference. The first device obtains the operation through detection and generates the first request.

Optionally, the first request includes time of the first conference, and the time of the first conference is start time of the first conference and/or end time of the first conference. Optionally, the first request further includes a conference type of the first conference. The conference type includes, for example, an open conference, a semi-privacy conference, or a full-privacy conference. The three conference types have different privacy requirements on the conference. For example, the open conference means that the conference does not limit a person attending the conference, the semi-privacy conference means that a person attending the conference includes at least a scheduled person, and the full-privacy conference means that a person attending the conference cannot include an unscheduled person. For example, the user may perform, on the first device, an operation for selecting the conference type. The first device obtains the operation through detection and determines the conference type of the first conference. Alternatively, for example, the first device determines a preset conference type as the conference type of the first conference.

The first server sends the information about the first conference to the first device. The information about the first conference includes an identifier of the first conference and/or the time of the first conference. For the time of the first conference, refer to the foregoing descriptions.

S202: The first device sends the information about the first conference to the second device. Correspondingly, the second device receives the information about the first conference from the first device.

It should be noted that, in this embodiment of this application, an example in which the first device sends the information about the first conference to the second device is used. However, actually, the second device may obtain the information about the first conference in a plurality of manners. For example, the second device may obtain the information about the first conference based on an operation of inputting the information about the first conference by a user who needs to attend the first conference. Therefore, S202 is an optional step.

S203: The first device obtains first sign-in information.

For example, the first sign-in information indicates a person scheduled, by using the first device, to attend the first conference. The first sign-in information includes one or more of the following (1) and (2).

### (1) Identity information of the person scheduled to attend the first conference:

The identity information of the person scheduled to attend the first conference indicates identity information of a person scheduled to attend the first conference in a first range, where identity information of one person includes, for example, an identity and/or a face image of the person. For example, the identity is a unique identifier of the person in a conference-type application, or an identity card number of the person.

It should be noted that, in this embodiment of this application, the person scheduled to attend the first conference is a person who schedules the first conference by using a device. In other words, the person scheduled to attend the first conference is specific for a device. For example, if the person 1 is scheduled to attend the first conference by using the first device, for the first device, the person 1 is a person scheduled to attend the first conference. Unless otherwise specified, in this embodiment of this application, the person scheduled to attend the first conference is a person scheduled to attend the first conference by using the first device.

### (2) Identifier of a third device:

The third device is a device associated with the person scheduled to attend the first conference. One person attending the first conference may correspond to one third device. If there are a plurality of persons scheduled to attend the first conference, there are also a plurality of third devices.

For example, the first device may pre-store the first sign-in information, or the user performs a sign-in operation on the first device, and the first device detects the sign-in operation to obtain the first sign-in information.

Optionally, the first device may further send the first sign-in information to the first server. Alternatively, if the first device communicates with the second server, the first device may send the first sign-in information to the second server. The second server is, for example, the second server shown in FIG. 1A.

Similarly, the second device may also obtain second sign-in information, and the second sign-in information indicates a person scheduled to attend the first conference by using the second device. For a manner of obtaining the second sign-in information and content of the second sign-in information, refer to content of S24.

In a possible implementation, the first device may schedule the first conference. The following uses an example in which the first device schedules the first conference for description.

For example, the first device may obtain scheduling information based on an input operation of the user. The scheduling information includes information about the first device, for example, an identifier of the first device, and specifically, for example, one or more of an ultra-wideband (ultra-wideband, UWB) identifier of the first device, an identifier of a Bluetooth module in the first device, or a phone number of the first device. Optionally, the scheduling information further includes the first sign-in information. In this case, the first device may not need to perform S203, that is, S203 is an optional step.

It should be noted that, if a device used by the person scheduled to attend the first conference is also the first device, the third device and the first device in this embodiment of this application are a same device.

Similarly, the second device may also schedule the first conference. For a manner of scheduling the first conference by the second device, refer to content of scheduling the first conference by the first device.

S204: The first device accesses the first conference.

When the user needs to access the first conference, the user may perform, on the first device, an operation of accessing the first conference. The first device detects the operation, generates a second request, and sends the second request to the first server. The second request is for requesting to access the first conference. Alternatively, after the start time of the first conference is reached, the first server prompts, based on the information about the first device in the scheduling information, the first device to access the first conference.

For example, the second request includes the identifier of the first conference, so that the first server may determine, based on the identifier of the first conference, that the first device needs to access the first conference.

It should be noted that S204 and S203 may be performed in any sequence. This is not limited in this embodiment of this application.

The first device receives and processes multimedia information from the second device. Similarly, the second device also receives and processes multimedia information from the first device. In this embodiment of this application, a multimedia information processing process in this embodiment of this application is described by using an example in which the first device processes the multimedia information from the second device.

S205: The second device sends the multimedia information to the first device. S205 includes S205a and S205b. S205a is that the second device sends the multimedia information to the first server, and correspondingly, the first server receives the multimedia information from the second device. S205b is that the first server sends the multimedia information to the first device, and correspondingly, the first device receives the multimedia information from the first server.

It should be noted that, unless otherwise specified, the multimedia information in this embodiment of this application is the multimedia information sent by the second device to the first device.

For example, the second device may capture a video by using a video capture apparatus associated with the second device, and obtain the multimedia information including video information corresponding to the video. The second device may further capture audio by using an audio capture apparatus associated with the second device, and obtain the multimedia information including audio information corresponding to the audio. The second device may further obtain, based on an interface currently displayed by the second device, the multimedia information including information about the shared interface.

In addition to the foregoing information, the multimedia information may further include other information, and manners of obtaining the pieces of information by the second device may be correspondingly different. This is not limited in this embodiment of this application.

Optionally, the second device may further output the multimedia information.

S206: The first device outputs the multimedia information.

The first device may output the multimedia information from the second device. For example, if the multimedia information includes the video information, the first device may play the video corresponding to the video information.

Optionally, the first device may output the multimedia information in a first window. It should be noted that, if the multimedia information includes a plurality of pieces of information, the first device may display, in different windows, different information included in the multimedia information.

S207: If a person in the first range meets a set condition, the first device stops outputting the multimedia information.

For a meaning of the first range, refer to the foregoing descriptions. The set condition includes one or more of the following condition 1 to condition 4. The following describes the conditions.

Condition 1: A quantity of persons in the first range is a first quantity.

A value of the first quantity may be pre-stored in the first device. For example, the value of the first quantity is 0. Alternatively, the value of the first quantity may be set based on a quantity of persons scheduled to attend the first conference. For example, the first quantity is a scheduled proportion of the quantity of persons scheduled to attend the first conference.

Condition 2: Some of persons in the first range are not persons scheduled to attend the first conference or none of persons in the first range is a person scheduled to attend the first conference. For a meaning of the person scheduled to attend the first conference, refer to the foregoing descriptions.

Optionally, the condition 2 may include the following condition ① or condition ② that are separately described below.

Condition ①: At least one of the persons in the first range is not the person scheduled to attend the first conference.

Condition CD: None of the persons in the first range is the person scheduled to attend the first conference.

Condition 3: Duration in which a quantity of persons in the first range is a first quantity reaches first set duration.

For a value and a meaning of the first quantity, refer to the foregoing descriptions. A value of the first set duration may be pre-stored in the first device, or may be set by the first device.

In the condition 3 provided in this embodiment of this application, the duration in which the quantity of persons in the first range remains the first quantity is considered. If the duration in which the quantity of persons in the first range remains the first quantity is less than the first set duration, where for example, this may be because the person temporarily leaves but not because the person expects to interrupt the conference, the first device does not stop outputting the multimedia information. This may reduce a quantity of times that the first device stops outputting the multimedia information, and helps improve user experience.

Condition 4: Duration in which some of persons in the first range are not persons scheduled to attend the first conference or none of persons in the first range is a person scheduled to attend the first conference reaches first set duration. For a meaning of the first set duration, refer to the foregoing descriptions. It should be noted that a value of the first set duration in the condition 4 may be different from the value of the first set duration in the condition 3.

Optionally, the condition 4 may include a condition ① or a condition ②.

Condition ①: Duration in which at least one of the persons in the first range is not the person scheduled to attend the first conference reaches the first set duration.

Condition ②: Duration in which some of the persons in the first range are not the persons scheduled to attend the first conference reaches the first set duration.

The foregoing describes several optional set conditions. For different conferences, corresponding set conditions may be the same or may be different. This is not limited in this embodiment of this application. The following describes how the first device obtains a set condition corresponding to the first conference.

Manner 1: The first device may pre-store a set condition, and the first device may determine the pre-stored set condition as the set condition corresponding to the first conference.

Manner 2: The first device selects one of a plurality of set conditions as the set condition corresponding to the first conference.

For example, the first device pre-stores a plurality of set conditions. The user may perform an operation of selecting a set condition in the first device, and the first device determines, based on the selection operation, the set condition corresponding to the first conference from the plurality of set conditions.

Manner 3: The first device determines, based on the conference type of the first conference, the set condition corresponding to the first conference.

The first device pre-stores a correspondence between the conference type and the set condition. The correspondence may include at least one conference type and a set condition corresponding to each of the at least one conference type. For a meaning of the conference type, refer to the foregoing descriptions. After determining the conference type of the first conference, the first device determines, from the correspondence, a set condition corresponding to the conference type as the set condition corresponding to the first conference.

For example, refer to Table 1. The correspondence pre-stored by the first device includes one or more items in Table 1.

**Table 1**

| Conference type | Set condition |
|---|---|
| Open conference | Condition 3 |
| Semi-privacy conference | Condition ① in the condition 4 |
| Full-privacy conference | Condition ② in the condition 4 |

For example, when the first device determines that the conference type of the first conference is the open conference, the first device may determine, based on the correspondence in Table 1, that the set condition corresponding to the first conference is the condition 3, that is, the duration in which the quantity of persons in the first range is the first quantity reaches the first set duration.

The first device may determine by itself whether the person in the first range meets the set condition, or the first device may receive a determining result from the second server, where the determining result indicates that the person in the first range meets the set condition, or the person in the first range does not meet the set condition. The following uses an example in which the first device determines whether the person in the first range meets the set condition for description.

If content of the set conditions corresponding to the first conference is different, manners in which the first device determines whether the person in the first range meets the set condition are also different. The following uses examples for description.

If the set condition is the condition 1, the first device may determine the quantity of persons in the first range, to determine whether the quantity of persons in the first range is the first quantity. The following describes a manner in which the first device determines the quantity of persons in the first range.

### Determining method 1:

The first device determines a quantity of human bodies included in a video captured by a video capture apparatus associated with the first device as the quantity of persons in the first range.

To simplify description, the video captured by the video capture apparatus associated with the first device when the first device accesses the first conference is referred to as a video in the first range for short below. The first device identifies the human body in the video in the first range, to obtain the quantity of human bodies.

For example, the video capture apparatus associated with the first device includes a first video capture apparatus and a second video capture apparatus, and the video in the first range includes a first video captured by the first video capture apparatus and a second video captured by the second video capture apparatus. In this case, the first device determines a quantity of human bodies in the first video. If the quantity of human bodies in the first video is the first quantity, the first device may continue to determine a quantity of human bodies in the second video, and determine the quantity of human bodies in the second video as a quantity of human bodies in the first range, to obtain the quantity of persons in the first range.

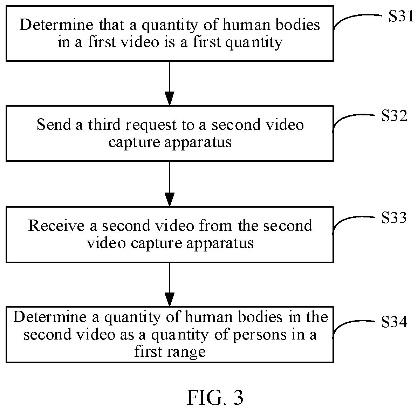

With reference to a schematic flowchart of a method for determining a quantity of persons in a first range shown in FIG. 3, the following describes a specific solution in the determining method 1.

S31: A first device determines that a quantity of human bodies in a first video is a first quantity.

The first device detects the quantity of human bodies in the first video. If the quantity of human bodies in the first video is not the first quantity, the first device may continue to detect the quantity of human bodies in the first video. If the quantity of human bodies in the first video is the first quantity, S32 continues to be performed. To be specific, the first device sends a third request to a second video capture apparatus. The third request is for requesting to obtain a video captured by the second video capture apparatus.

S33: The first device receives a second video from the second video capture apparatus.

The second video capture apparatus captures the second video, and sends the second video captured by the second video capture apparatus to the first device. Correspondingly, the first device receives the second video from the second video capture apparatus.

S34: The first device determines a quantity of human bodies in the second video as the quantity of persons in the first range.

In the embodiment shown in FIG. 3, when the quantity of human bodies in the first video is the first quantity, the first device may determine the quantity of persons in the first range again based on the quantity of human bodies in the second video. This helps improve accuracy of the determined quantity of persons in the first range. In addition, in this embodiment of this application, the second video capture apparatus needs to capture the second video only when the quantity of human bodies in the first video is the first quantity. To be specific, the second video capture apparatus does not need to always be in a working state. This helps reduce energy consumption of the second video capture apparatus.

### Determining method 2:

The first device determines a quantity of third devices in the first range as the quantity of persons in the first range. For a meaning of the third device, refer to the foregoing descriptions.

The first device may determine the quantity of third devices in the first range by using a short-range communication technology. The short-range communication technology includes, for example, a UWB communication technology, a Bluetooth communication technology, or a near-field communication (near-field communication, NFC) technology.

Specifically, if the first sign-in information includes the identifier of the third device, the first device may send a message to the third device through short-range communication based on the identifier of the third device. The message is for requesting to obtain the identifier of the third device. If a third device is in the first range, it indicates that the third device may feed back an identifier of the third device to the first device. If a third device is not in the first range, it indicates that the first device cannot receive an identifier of the third device. By analogy, the first device may determine a quantity of identifiers that are of the third device and that are received within predetermined duration as the quantity of persons in the first range.

It should be noted that, in this embodiment of this application, an example in which the first device signs in to obtain the identifier of the third device is used. However, actually, the first device may alternatively obtain the identifier of the third device in another manner. This is not limited in this embodiment of this application.

It should be noted that the foregoing determining method 2 is applicable to a scenario in which the third device supports the short-range communication.

Determining method 3: The first device counts a difference (represented by I_count) between a quantity of persons entering the first range and a quantity of persons exiting the first range, and uses the difference as the quantity of persons in the first range.

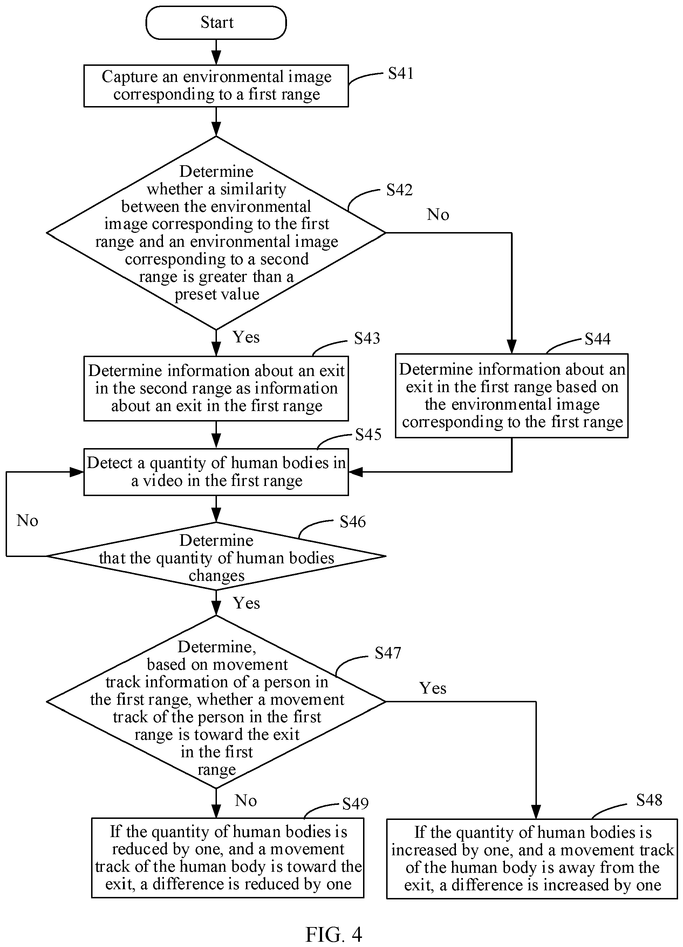

With reference to a schematic flowchart of determining a difference shown in FIG. 4, the following describes a manner of determining the difference.

S41: A first device captures an environmental image corresponding to a first range.

The first device captures, by using a video capture apparatus associated with the first device, the environmental image corresponding to the first range. The environmental image is, for example, an image that includes all spatial ranges in the first range, or an image that includes a part of spatial ranges in the first range.

S42: Determine whether a similarity between the environmental image corresponding to the first range and an environmental image corresponding to a second range is greater than a preset value.

The second range is a capture range of a video capture apparatus associated with the first device when the first device accesses some or all of at least one second conference. For a meaning of the second conference, refer to the foregoing descriptions. When accessing any of some or all second conferences, the first device may capture, by using the video capture apparatus associated with the first device, the environmental image corresponding to the second range, and determine the similarity between the environmental image corresponding to the first range and the environmental image corresponding to the second range.

If the similarity is greater than the preset value, it indicates that there is a high probability that the second range is the same as the first range. To be specific, it indicates that there is a low probability that the video capture apparatus associated with the first device when the first device accesses the first conference changes from the video capture apparatus associated with the first device when the first device accesses the second conference. Therefore, the first device may perform S43: Determine information about an exit in the second range as information about an exit in the first range. The information about the exit includes, for example, a direction of the exit relative to the first device and/or a location of the exit in the first range. For example, the first range corresponds to a conference room, and the exit is a door of the conference room.

If the similarity is less than or equal to the preset value, it indicates that there is a high probability that the second range is different from the first range. To be specific, it indicates that there is a high probability that the video capture apparatus associated with the first device when the first device accesses the first conference changes from the video capture apparatus associated with the first device when the first device accesses the second conference. Therefore, the first device may perform S44: Determine information about an exit in the first range based on the environmental image corresponding to the first range.

The following describes an example of a manner in which the first device determines the information about the exit in the second range.

For example, when accessing any of the at least one second conference, the first device identifies an exit in the environmental image captured by the video capture apparatus associated with the first device, to obtain information about the exit corresponding to the second conference, and uses the information about the exit as the information about the exit in the second range.

Alternatively, for example, if the at least one second conference includes a plurality of second conferences, the first device may obtain information about an exit corresponding to each of the plurality of second conferences. If the information about the exit corresponding to each of the plurality of second conferences is the same, the first device may determine information about an exit corresponding to any second conference as the exit in the second range.

If the information about the exit corresponding to each of the plurality of second conferences is not completely the same, it indicates that video capture apparatuses associated with the first device when the first device accesses different second conferences change from the video capture apparatus associated with the first device when the first device accesses the first conference. In this case, the first device may use information about an exit corresponding to a second conference closest to the accessed first conference as the information about the exit in the second range.

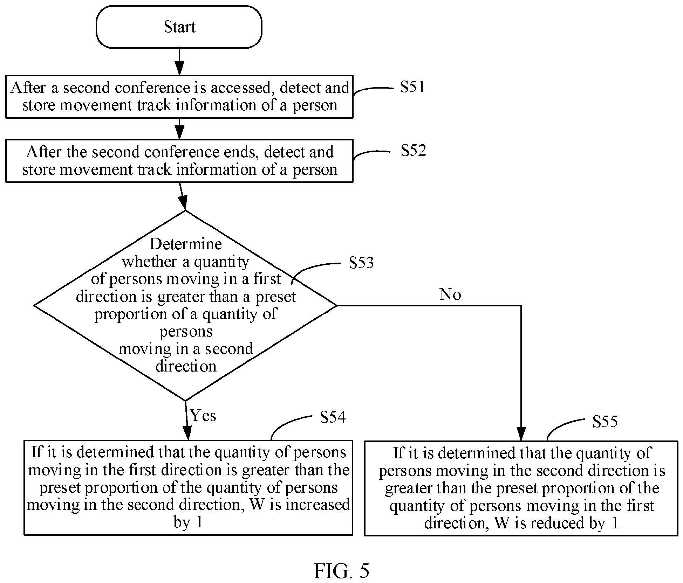

Alternatively, for example, the first device may count information about an exit of each of the at least one second conference, to determine the information about the exit in the second range. With reference to a schematic diagram of a process of determining information about an exit in a second range shown in FIG. 5, the following provides descriptions of determining the information about the exit in the second range.

S51: After accessing a second conference, a first device detects and stores movement track information of a person.

The person herein is a person in a video captured by a video capture apparatus associated with the first device when the first device accesses the second conference. After the first device accesses the second conference, the first device may detect and store the movement track information of the person. To reduce an amount of stored data, the first device may store movement track information of the person within third set duration from current time. The third set duration is, for example, 10 minutes.

S52: After the second conference ends, the first device detects and stores movement track information of a person.

For example, the first device may store movement track information of the person within 5 minutes after the second conference ends.

S53: The first device determines whether a quantity of persons moving in a first direction is greater than a preset proportion of a quantity of persons moving in a second direction. A value of the preset proportion may be preconfigured in the first device, for example, 0.8. The first direction and the second direction are opposite directions. For example, the first direction is from a left side relative to the first device to a right side relative to the first device, and the second direction is from a right side relative to the first device to a left side relative to the first device.

The first device may compare the movement track information of the person obtained in S51 with the movement track information of the person obtained in S52, to determine the quantity of persons moving in the first direction and the quantity of persons moving in the second direction after the conference ends.

If the first device determines that the quantity of persons moving in the first direction is greater than the preset proportion of the quantity of persons moving in the second direction, it indicates that after the second conference ends, most persons move in the first direction, indicating that there is a high probability that the exit corresponds to the first direction. Therefore, S54 may be performed, that is, W is increased by 1. W may be understood as a quantity of statistics that the information about the exit in the second range corresponds to the first direction. If the first device determines that the quantity of persons moving in the second direction is greater than the preset proportion of the quantity of persons moving in the first direction, it indicates that after the second conference ends, most persons move in the second direction, indicating that there is a high probability that the exit is in the second direction. Therefore, S55 may be performed, that is, W is reduced by 1.

By analogy, after counting at least one second conference, the first device may obtain a final value of W, and determine a direction of the exit in the second range based on the value of W. For example, if the first device determines that an absolute value of W is greater than a preset threshold, the first device determines a direction indicated by W as the information about the exit in the second range. If it is determined that an absolute value of W is less than or equal to a preset threshold, it indicates that a direction indicated by W is not necessarily the information about the exit in the second range. In this case, the first device may directly use an environmental image in a first range to identify information about an exit in the first range. For example, if a quantity of at least one conference is 10, the value of W is 9, and the preset threshold is 8, it is determined that exits of most second conferences correspond to the first direction, that is, the information about the exit in the second range is the first direction. Further, in this case, the first device may further update the value of W to an initial value, where the initial value is, for example, 0, so that the first device subsequently re-accumulates the value of W. For example, after a first conference ends, the first device may, based on a movement direction that is of a person and that is obtained after the first conference ends, re-accumulate the value of W.

S45: The first device detects a quantity of human bodies in a video in the first range.

For a meaning of the video in the first range, refer to the foregoing descriptions. For a manner in which the first device detects the quantity of human bodies, refer to the foregoing descriptions.

S46: The first device determines whether the quantity of human bodies changes.

After accessing the first conference, the first device may perform step S45 irregularly or periodically, to determine whether the quantity of human bodies in the video in the first range changes. If the quantity of human bodies in the first range does not change, the first device continues to perform S45. If the quantity of human bodies in the video in the first range changes, the first device may perform S47: Determine, based on movement track information of the person in the first range, whether a movement track of the person in the first range is toward the exit in the first range.

If the quantity of human bodies is increased by one, and a movement track of the human body is away from the exit, it indicates that a person corresponding to the human body enters the first range, and the first device performs S48, that is, the difference (I_count) is increased by one. If the quantity of human bodies is reduced by one, and a movement track of the human body is toward the exit, it indicates that a person corresponding to the human body is away from the exit, and the first device performs S49, that is, the difference (I_count) is reduced by one.

When the quantity of persons in the first range needs to be determined, the first device directly uses the currently obtained difference as the quantity of persons in the first range.

It should be noted that an initial value of the difference (I count) in this embodiment of this application may be 0.

Determining method 4: The first device receives the quantity of persons in the first range from the second server. For determining the quantity of persons in the first range by the second server, refer to the foregoing determining method 1, determining method 2, and determining method 3. Details are not listed herein again.

Optionally, after the first device accesses the first conference, the first device may periodically perform the foregoing determining method 1, determining method 2, determining method 3, or determining method 4, to continuously detect the quantity of persons in the first range.

If the set condition is the foregoing condition 2, the first device may compare the person in the first range with the person scheduled to attend the first conference, to determine whether the person in the first range meets the condition 2. The following describes a manner in which the first device compares the person in the first range with the person scheduled to attend the first conference.

For example, if the first sign-in information includes a face image of the person scheduled to attend the first conference, the first device detects a face image in the video in the first range, and compares the detected face image with the face image of the person scheduled to attend the first conference, to determine whether the person in the first range meets the set condition.

If at least one of the detected face images is not the face image of the person scheduled to attend the first conference, it is determined that the person in the first range meets the condition ① in the condition 2. If the detected face image is the face image of the person scheduled to attend the first conference, the first device determines that the person in the first range does not meet the condition ① in the condition 2.

If the detected face image is not the face image of the person scheduled to attend the first conference, it is determined that the person in the first range meets the condition ② in the foregoing condition 2. If the face image of at least one person in the detected face images is the face image of the person scheduled to attend the first conference, the first device determines that the person in the first range does not meet the condition ② in the foregoing condition 2.

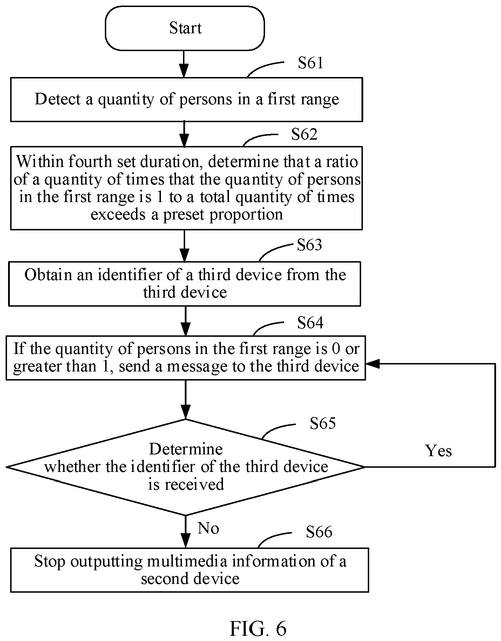

In an example, when the set condition corresponding to the first conference is the foregoing condition 1 or 2, the first device determines that the person in the first range meets the set condition, and determines that the third device is not in the first range, indicating that there is a higher probability that the person scheduled to attend the first conference is not in the first range. Therefore, the first device may directly stop outputting the multimedia information. With reference to the manner in the foregoing determining method 2, if the first device does not receive the identifier of the third device within the predetermined duration, or the first device repeatedly sends the message to the third device for N times, where N is a positive integer, but the first device does not receive the identifier of the third device, the first device determines that the third device is not in the first range. To be specific, no person scheduled to attend the first conference exists in the first range. With reference to a schematic method flowchart of a multimedia information processing method shown in FIG. 6, the following describes the solutions in embodiments of this application by using an example.

S61: A first device detects a quantity of persons in a first range.

For a manner of detecting the quantity of persons in the first range, refer to the foregoing descriptions. Details are not described herein again.

S62: Within fourth set duration, the first device determines that a ratio of a quantity of times that the quantity of persons in the first range is 1 to a total quantity of times exceeds a preset proportion. A value of the preset proportion may be pre-stored in the first device.

The first device periodically detects the quantity of persons in the first range within the fourth set duration after accessing a first conference. The fourth set duration may be preconfigured in the first device. If it is detected that the ratio of the quantity of times that the quantity of persons in the first range is 1 to the total quantity of times exceeds the preset proportion, it indicates that after the first conference starts, only one person attends the first conference in most cases. Therefore, the first device determines that the first conference is a single-person conference. The single-person conference means that a quantity of persons attending the first conference by using the first device is 1. The total quantity of times is a quantity of times that the first device detects the quantity of persons in the first range within the fourth set duration.

For example, that a value of the fourth set duration is 10 minutes, a periodicity is 5 seconds, and the preset proportion is 0.9 is used an example. The first device counts the quantity (p_num) of persons in the first range every 5 seconds within 10 minutes after the first conference starts. If the first device determines that a quantity of times that p_num is 1 exceeds 0.9 of the total quantity of times, the first device determines that the first conference is the single-person conference.

S63: The first device obtains an identifier of a third device from the third device.

For example, the first device requests to obtain the identifier of the third device from the third device. For a meaning of the identifier of the third device, refer to the foregoing descriptions.

S64: If the first device determines that the quantity of persons in the first range is 0 or greater than 1, the first device sends a message to the third device.

In S62, it is determined that the first conference is the single-person conference. In a normal case, the quantity of persons in the first range is 1. If the first conference is an open conference or a semi-privacy conference, and the first device determines that the quantity of persons in the first range is 0, it indicates that a person 1 is not in the first range. If the first conference is a full-privacy conference, and the first device determines that the quantity of persons in the first range is greater than 1, it indicates that a person other than the person 1 appears in the first range. Certainly, when the first conference is the semi-privacy conference, if the first device determines that the quantity of persons in the first range is greater than 1, and the first device determines that the persons in the first range are not a person scheduled to attend the first conference, the first device sends the message to the third device.

For example, the first device may periodically send the message to the third device through Bluetooth communication. The message is for requesting to obtain the identifier of the third device.

S65: The first device determines whether the identifier of the third device is received.

If the identifier of the third device is not received, the first device may perform S66: Stop outputting multimedia information. If the identifier of the third device is received, the first device may continue to perform step S65.

If the set condition is the condition 3, the first device may continuously detect the quantity of persons in the first range. For a manner of detecting the quantity of persons in the first range, refer to the foregoing descriptions. If the duration in which the quantity of persons in the first range remains the first quantity meets the first set duration, it is determined that the person in the first range meets the foregoing condition 3. If the duration in which the quantity of persons in the first range remains the first quantity is less than the first set duration, or if the quantity of persons in the first range is not the first quantity, the first device determines that the person in the first range does not meet the foregoing condition 3.

If the set condition is the foregoing condition 4, the first device may compare the person in the first range with the person scheduled to attend the first conference, to determine whether the person in the first range meets the condition 4. For a comparison manner, refer to the content described above.

Specifically, if the duration in which the at least one of the persons in the first range is not the person scheduled to attend the first conference reaches the first set duration, it is determined that the person in the first range meets the condition ① in the condition 4. If the duration in which the at least one of the persons in the first range is not the person scheduled to attend the first conference is less than the first set duration, or the person in the first range is the person scheduled to attend the first conference, it is determined that the person in the first range does not meet the condition ① in the condition 4.

If the duration in which none of the persons in the first range is the person scheduled to attend the first conference reaches the first set duration, it is determined that the person in the first range meets the condition ② in the condition 4. If the duration in which none of the persons in the first range is the person scheduled to attend the first conference does not reach the first set duration, or the person in the first range is the person scheduled to attend the first conference, it is determined that the person in the first range does not meet the condition ② in the foregoing condition 4.

In an example, the first device may determine the value of the first set duration in the foregoing condition 3 or condition 4 based on a value relationship obtained by comparing the difference with the determined quantity of persons in the first range.

If the determined quantity of persons in the first range is equal to the difference, it indicates that there is high accuracy of the determined quantity of persons in the first range. Therefore, the value of the first set duration may be set to first duration. If the determined quantity of persons in the first range is not equal to the difference (where for example, the determined quantity of persons in the first range is greater than the difference), it indicates that there is low accuracy of the determined quantity of persons in the first range. Therefore, the first device may set the value of the first set duration to second duration, where the second duration is greater than the first duration.

In this embodiment of this application, when there is the high accuracy of the determined quantity of persons in the first range, the value of the first set duration is set to a small value, so that the first device may stop outputting the multimedia information as soon as possible. When there is the low accuracy of the determined quantity of persons in the first range, the value of the first set duration is set to a large value, to reduce a probability that the first device stops outputting the multimedia information due to misjudgment.

It should be noted that the first device may periodically or irregularly trigger to determine whether the person in the first range meets the set condition corresponding to the first conference. Alternatively, when the first device determines that the quantity of persons in the first range changes from a quantity that is of persons in the first range and that is determined last time, the first device triggers to determine whether the person in the first range meets the set condition corresponding to the first conference. This is not limited in this embodiment of this application.

If the first device determines that the person in the first range meets the set condition corresponding to the first conference, the first device may stop outputting the multimedia information. This is equivalent to that the first device suspends the first conference. In this case, the first device can communicate with the second device by using the first server, but the first device does not output the multimedia information from the second device.

Specifically, when determining that the person in the first range meets the set condition, the first device may continue to receive the multimedia information from the second device, but does not parse the multimedia information and does not output the multimedia information. Alternatively, the first device continues to receive the multimedia information, parses the multimedia information, but does not output the multimedia information.

If specific content of the multimedia information is different, specific manners of stopping outputting are also different. The following provides an example for description. For example, if the multimedia information includes the video information, the first device may stop playing the video corresponding to the video information. For another example, if the multimedia information includes the audio information, the first device may stop playing the audio corresponding to the audio information. For another example, if the multimedia information includes information about a shared screen, the first device may stop displaying the shared screen.

It should be noted that, in the embodiment shown in FIG. 2, an example in which the first device and the second device access the first conference is used for description. If another device accesses the first conference, the first device may further stop outputting multimedia information from the another device when determining that the person in the first range meets the set condition.

Optionally, if the first device outputs the multimedia information in the first window, the first device may stop displaying the multimedia information in the first window when the first device determines that the person in the first range meets the set condition. In other words, the first window stops displaying the multimedia information. Optionally, content displayed in the first window is empty or preset content, and the preset content may be pre-stored in the first device. Further, the first device shrinks the first window.

In an example, when the first device determines that the person in the first range meets the set condition, the first device may capture the video by using the video capture apparatus associated with the first device, and send the video information to the second device. Further, the second device may still display the video corresponding to the video information from the first device. This helps improve use experience of a person in the second device. Alternatively, the first device may stop sending, to the second device, the video captured by the video capture apparatus associated with the first device.

In an example, the first device may capture the audio by using the audio capture apparatus associated with the first device, and send the audio information of the audio to the second device.

Optionally, the first device may capture noise by using the audio capture apparatus associated with the first device. If the noise in the first range reaches an upper limit of noise, it indicates that the noise at the first device is large. To avoid interfering with the second device, the first device may stop sending the audio information to the second device. If the noise in the first range is less than the upper limit of noise, the first device may continue to send the audio information to the second device. A value of the upper limit of noise may be pre-stored in the first device, or the first device sets the upper limit of noise based on the quantity of persons scheduled to attend the first conference. This is not limited in this embodiment of this application.

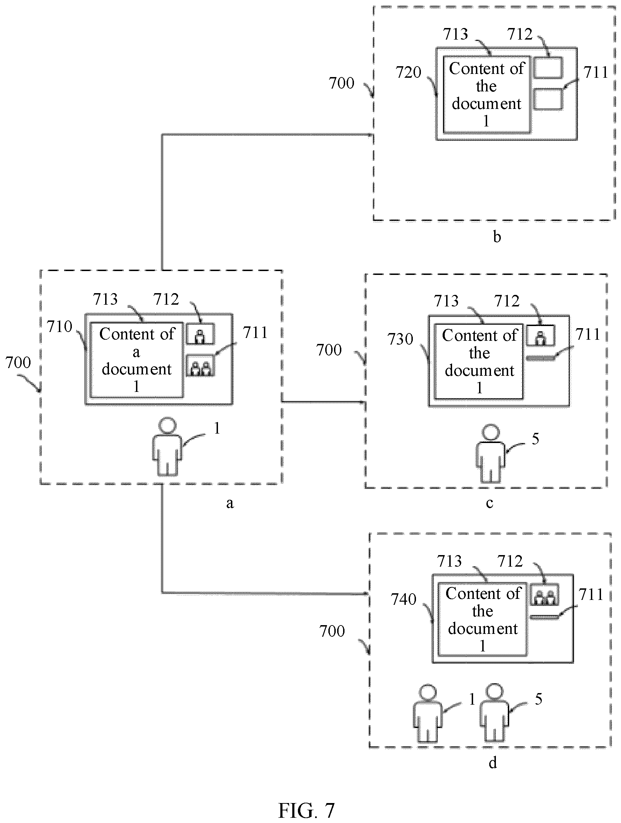

For example, FIG. 7 is a schematic diagram of a process in which a first device stops outputting multimedia information according to an embodiment of this application. As shown in FIG. 7, after the first device accesses a first conference, the first device displays a first interface 710 shown in a in FIG. 7. The first interface 710 includes a first window 711 (displaying video information from a second device, where face images of a person 2 and a person 3 shown in FIG. 7 are content of the video information), a second window 712 (displaying video information captured by the first device, where a face image of a person 1 shown in FIG. 7 is content of the video information), and a third window 713 (displaying content of a document 1).

An example in which the first conference is an open conference, a set condition is the foregoing condition 1, and a person scheduled to attend the first conference is the person 1 is used. If the first device determines that there is no user in a first range 700, the first device displays a second interface 720 shown in b in FIG. 7. In the second interface 720, a third window 713 still displays the content of the document 1, a second window 712 still displays a video (where as shown in FIG. 7, the face image of the person 1 is not included) in the first range 170 captured by the first device, and a first window 711 displays nothing (where as shown in FIG. 7, content in the first window is empty). In addition, a size of the first window 711 in the second interface 720 is smaller than a size of the first window 711 in the first interface 710.

An example in which the first conference is a semi-privacy conference, a set condition is the foregoing condition 1, and a person scheduled to attend the first conference is the person 1 is used. If the first device determines that a person 5 instead of the person 1 is in a first range, the first device displays a third interface 730 shown in c in FIG. 7. In the third interface 730, a third window 713 still displays the content of the document 1, a second window 712 still displays a video (a face image of the person 5 shown in FIG. 7) in the first range 170 captured by the first device, and a first window 711 displays nothing (where as shown in FIG. 7, content in the first window is empty).

An example in which the first conference is a full-privacy conference, a set condition is the foregoing condition 1, and a person scheduled to attend the first conference is the person 1 is used. If the first device determines that a person 5 besides the person 1 is included in the first range, the first device displays a third interface 740 shown in d in FIG. 7. In the fourth interface 740, a third window 713 still displays the content of the document 1, a second window 712 still displays a video (face images of the person 1 and the person 5 shown in FIG. 7) in the first range 170 captured by the first device, and a first window 711 displays nothing (where as shown in FIG. 7, content in the first window is empty).

S208: If the person in the first range does not meet the set condition, the first device resumes outputting the multimedia information.

After stopping outputting the multimedia information, the first device may continuously capture the video by using the video capture apparatus associated with the first device, and detect a situation of the person in the first range by using the video, to determine whether the person in the first range meets the set condition. For a manner of determining whether the person in the first range does not meet the set condition, refer to the foregoing descriptions. If the first device determines that the person in the first range does not meet the set condition, the first device may resume outputting the multimedia information.

Still refer to the example shown in FIG. 7. If the first device determines, after displaying the second interface 720 shown in FIG. 7, that the person in the first range does not meet the set condition, the first device may display the first interface 710 shown in FIG. 7.

In this embodiment of this application, if the first device may determine, based on the situation of the person in the first range, that the person in the first range does not meet the set condition, the first device may automatically resume outputting the multimedia information. This reduces a user operation, and helps improve user experience.

It should be noted that, because the person in the first range may always meet the set condition after the first device stops outputting the multimedia information, in this case, the first device does not need to perform S208, that is, S208 is an optional step.

Optionally, after performing S208, the first device may continue to determine whether the person in the first range meets the set condition. If the set condition is met, S207 is performed.

S209: If duration for stopping outputting the multimedia information reaches second set duration, or if duration in which the person in the first range meets the set condition reaches second set duration, the first device exits the first conference.

The first device may start timing after stopping outputting the multimedia information, and the first device does not exit the first conference until timing duration reaches the second set duration. That the first device exits the first conference may be understood as that the first device ends the first conference. In this case, the first device disconnects from a communication connection to the first server. Further, the first device or the second server no longer detects the situation of the person in the first range, either. In this way, the conference can be automatically disconnected, so that the first device is prevented from suspending the conference for long time. This helps improve user experience.

Alternatively, the first device may start timing after the person in the first range meets the set condition, and the first device does not exit the first conference until timing duration reaches the second set duration. In this case, a value of the second set duration is greater than the value of the first set duration.

In an example, after the first device accesses the first conference, the first device may output projection information from a fourth device. After the first device exits the first conference, the first device may determine, based on the video captured by the video capture apparatus associated with the first device, whether projection is paused. If the first device determines that the projection is paused, the first device stops outputting the projection information from the fourth device. The fourth device is, for example, the fourth device shown in FIG. 1A. The following describes an example of a manner in which the first device determines whether the projection is paused.

For example, if the first device determines that the quantity of human bodies in the video captured by the video capture apparatus associated with the first device is a second quantity, or duration in which the quantity of human bodies in the video captured by the video capture apparatus associated with the first device is a second quantity reaches fifth set duration, the first device determines that the projection is paused. For a manner in which the first device determines the quantity of human bodies in the video captured by the video capture apparatus associated with the first device, refer to the foregoing descriptions. There may be any value relationship between a value of the second quantity and the value of the first quantity. For example, values of the second quantity and the first quantity are 0.

If the first device determines that the projection is paused, the first device stops outputting the projection information from the fourth device. In this case, the first device may communicate with the fourth device.

In an example, if after the first device stops outputting the projection information, the first device determines, based on the video captured by the video capture apparatus associated with the first device, that the projection does not end, the first device may resume outputting the projection information.

Optionally, when the first device stops outputting the projection information, the first device does not disconnect communication with the fourth device. If duration for stopping outputting the projection information reaches the fifth set duration, the first device ends a projection process between the first device and the fourth device. A value of the fifth set duration may be pre-stored in the first device.

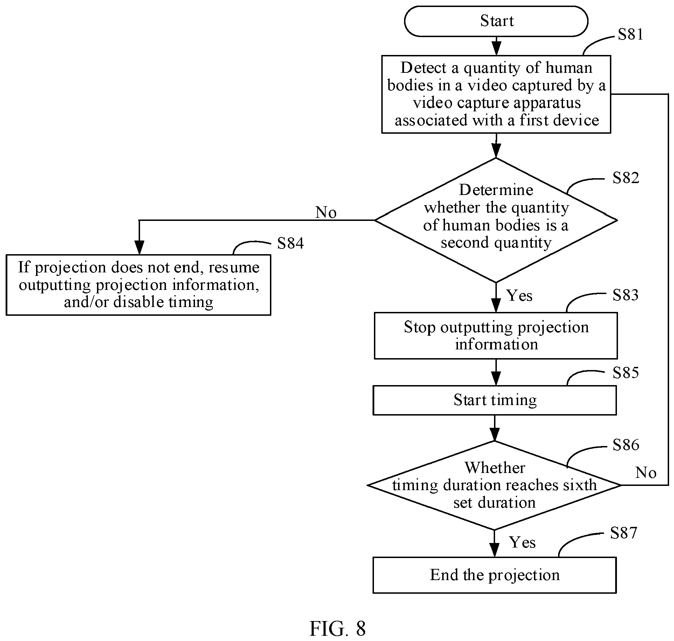

With reference to a flowchart of a method for pausing projection shown in FIG. 8, the following describes a process of pausing projection by using an example.

S81: A first device detects a quantity of human bodies in a video captured by a video capture apparatus associated with the first device.

S82: The first device determines whether the quantity of human bodies is a second quantity.

The quantity of human bodies herein is the quantity determined in S81. If the quantity of human bodies is the second quantity, the first device performs S83: Stop outputting projection information. If the quantity of human bodies is not the second quantity, the first device may perform S84: If the projection does not end, resume outputting projection information, and/or the first device disables timing.

S85: The first device starts timing.

S86: The first device determines whether timing duration reaches sixth set duration.

If the timing duration reaches the sixth set duration, S87 is performed, that is, the first device ends the projection. When the projection ends, the first device no longer receives the projection information from a fourth device. If the timing duration does not reach the sixth set duration, the first device performs S81.

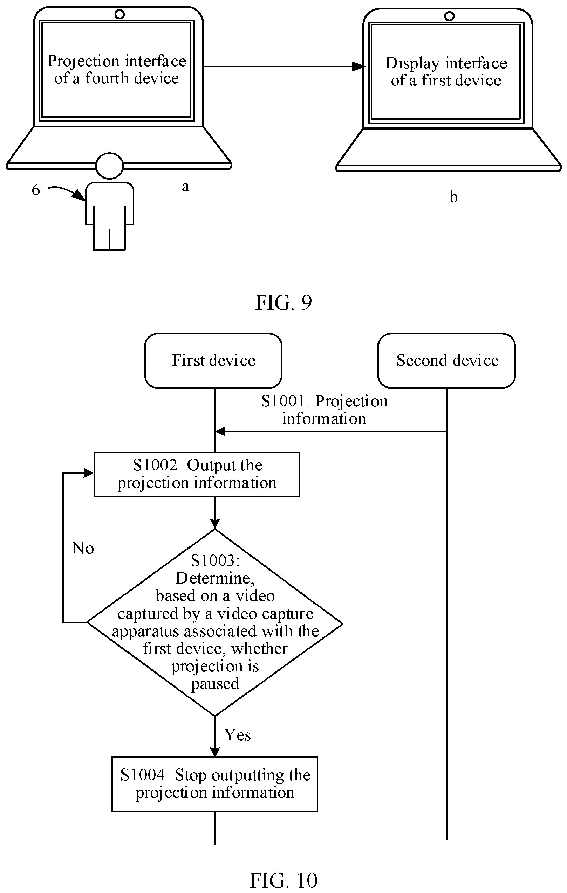

For example, FIG. 9 is a schematic diagram of an interface change of a first device in a projection process according to an embodiment of this application. The first device displays a projection interface of a fourth device in the projection process. In this case, a video captured by a video capture apparatus associated with the first device includes a person 6. When there is no person in the video captured by the first device by using the video capture apparatus associated with the first device, the first device determines that projection ends. Therefore, the first device may display a display interface of the first device.

It should be noted that S209 is a case that may occur after the first device stops outputting the multimedia information. If the user manually ends the first conference after the first device stops outputting the multimedia information, the first device does not need to perform S209, that is, S209 is optional.

In an example, S201 to S203, and S208 and S209 in FIG. 2 are all optional steps, and are shown by using dashed lines in FIG. 2.

It should be noted that any device that accesses the conference may perform the method shown in FIG. 2. Details are not listed herein again.

In the embodiment shown in FIG. 2, when the first device accesses the first conference, based on the situation of the person in the first range, the first device may selectively stop outputting the multimedia information from the second device, resume outputting the multimedia information from the second device, end the first conference, or the like, so that no manual operation is required. This simplifies the operation, helps improve user experience, and also improves device intelligence. In addition, when the person in the first range meets the set condition, outputting the multimedia information from the second device is stopped, so that leakage of the multimedia information from the second device can be avoided. This improves security of interaction between devices.

An example in which the embodiment shown in FIG. 2 is applied to the conference scenario shown in FIG. 1A is used. Certainly, the multimedia information processing method in this embodiment of this application may be further applied to the projection scenario shown in FIG. 1B. In this case, the first device is the first device shown in FIG. 1B, the first device may also access the first conference, and the first device is used as a projected device. The second device is the second device shown in FIG. 1B, and the second device is used as a projection source. The foregoing multimedia information is the projection information from the second device. The first device may process the projection information from the second device according to the multimedia information processing method shown in FIG. 3. Details are not listed one by one herein again.

To reduce an operation of a person, an embodiment of this application further provides another multimedia information processing solution. In this solution, a first device does not access any conference, and may output projection information from a second device. If the first device detects a video captured by a video capture apparatus associated with the first device and determines that projection ends, the first device may stop outputting the projection information from the second device. In other words, the first device may automatically determine whether the projection ends, and control whether to continue to output the projection information from the second device, so that no manual operation is required. This reduces the operation of a person, and may also reduce a risk of leakage of the projection information from the second device.

The multimedia information processing solution in this embodiment of this application is also applicable to the projection scenario shown in FIG. 1B. The following uses an example in which the multimedia information processing method is applicable to the projection scenario shown in FIG. 1B for description.

FIG. 10 is a schematic flowchart of a multimedia information processing method according to an embodiment of this application. Alternatively, it may be understood as a schematic diagram of interaction between the first device and the second device in FIG. 1B. It should be noted that, in FIG. 10, the first device does not access any conference. The first device is, for example, the first device shown in FIG. 1B, and the second device is, for example, the second device shown in FIG. 1B.

S 1001: The second device sends projection information to the first device.

If the first device can communicate with the second device, the second device may directly send the projection information to the first device. If the first device communicates with the second device by using a first server, the second device may send the projection information to the first device by using the first server.

S1002: The first device outputs the projection information.

The first device receives the projection information, and displays a projection interface from the second device based on the projection information.

S1003: The first device determines, based on a video captured by a video capture apparatus associated with the first device, whether projection is paused.

If it is determined that the projection is paused, S1004 is performed, that is, outputting the projection information is stopped. If it is determined that the projection is not paused, S1002 continues to be performed. For a manner of determining whether the projection is paused, refer to the foregoing descriptions. Optionally, when the first device stops outputting the projection information, the first device may further display a display interface of the first device.

In an example, if after stopping outputting the projection information, the first device determines, based on the video captured by the video capture apparatus associated with the first device, that the projection is not paused, the first device may resume outputting the projection information. For a manner of determining that the projection does not end, refer to the foregoing descriptions.

Optionally, when the first device stops outputting the projection information, the first device does not disconnect communication with the second device. If duration for stopping outputting the projection information reaches first set duration, the first device ends the projection. In this case, the first device disconnects a communication connection to the second device. A value of the first set duration may be preconfigured in the first device.

Optionally, the first device and the second device may exchange the projection information by using the first server. The first server is the first server shown in FIG. 1B.

In the embodiment shown in FIG. 10, when the first device does not access a first conference, based on the video captured by the video capture apparatus associated with the first device, the first device may selectively stop outputting the projection information from the second device, resume outputting the projection information from the second device, end the projection, or the like, so that no manual operation is required. This simplifies the operation of a person, helps improve user experience, and also improves device intelligence. In addition, selectively stopping outputting the projection information from the second device can avoid leakage of the projection information from the second device. This helps improve security of interaction between devices.

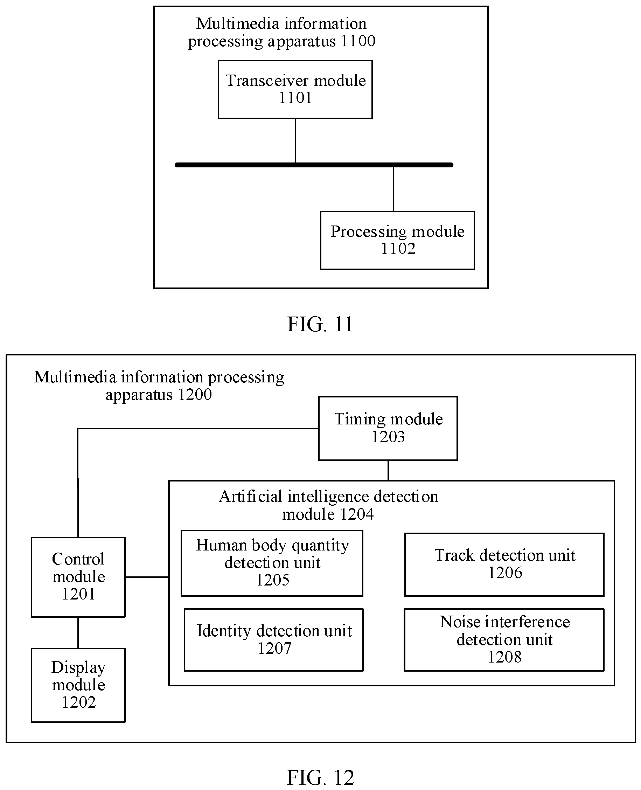

FIG. 11 is a schematic diagram of a structure of a multimedia information processing apparatus 1100. The multimedia information processing apparatus 1100 can implement a function of the first device in the method provided in embodiments of this application. The multimedia information processing apparatus 1100 may be a hardware structure, a software module, or a combination of a hardware structure and a software module. The multimedia information processing apparatus 1100 may be implemented by a chip system. In this embodiment of this application, the chip system may include a chip, or may include a chip and another discrete device.

The multimedia information processing apparatus 1100 may include a transceiver module 1101 and a processing module 1102.

The transceiver module 1101 may be configured to perform S204 and S205 in the embodiment shown in FIG. 2, and may be further configured to support another process of the technology described in this specification. The transceiver module 1101 is used by the multimedia information processing apparatus 1100 to communicate another module. The transceiver module 1101 may be a circuit, a device, an interface, a bus, a software module, a transceiver, or any other apparatus that can implement communication.

The processing module 1102 may be configured to perform S206 and S207 in the embodiment shown in FIG. 2, may further perform S208 or S209 in FIG. 2, and may be further configured to support another process of the technology described in this specification.

All related content of the steps in the foregoing method embodiments may be cited in function descriptions of corresponding functional modules. Details are not described herein again.

The functional modules in embodiments of this application may be integrated into one processor, each of the modules may exist alone physically, or two or more modules may be integrated into one module. The integrated module may be implemented in a form of hardware, or may be implemented in a form of a software functional module.

In addition, module division in embodiments of this application is an example, and is merely logical function division. In actual implementation, there may be another division manner. For example, FIG. 12 is another module division manner, or may be understood as a schematic diagram of a structure of another multimedia information processing apparatus.

As shown in FIG. 12, the multimedia information processing apparatus 1200 may be configured to implement a function of the first device shown in FIG. 2, or configured to implement a function of the multimedia information processing apparatus 1100 shown in FIG. 11. The multimedia information processing apparatus 1200 includes a control module 1201, a display module 1202, a timing module 1203, and an artificial intelligence (artificial intelligence, AI) detection module 1204. Optionally, the artificial intelligence detection module 1204 includes a human body quantity detection unit 1205, a track detection unit 1206, an identity detection unit 1207, and a noise interference detection unit 1208.

The AI detection module 1204 is configured to determine whether a quantity of persons in a first range meets a set condition, specifically, for example, determine whether the quantity of persons in the first range is a first quantity. The human body quantity detection unit 1205 is configured to detect, by using a video, a quantity of persons in a capture range of a video capture apparatus associated with a first device when the first device accesses a first conference. The track detection unit 1206 is configured to detect, by using the video, movement track information of the person in the capture range of the video capture apparatus associated with the first device. The identity detection unit 1207 is configured to detect, by using information about a person scheduled to attend a conference, whether the person in the capture range of the video capture apparatus associated with the first device is the person scheduled to attend the conference. The noise interference detection unit 1208 is configured to detect information about noise in a capture range of an audio capture apparatus associated with the first device.

The control module 1201 is configured to: when the quantity of persons in the first range meets the set condition, determine to stop outputting multimedia information from a second device. The timing module 1203 is configured to perform timing, for example, perform timing on duration for stopping outputting the multimedia information from the second device. The display module 1202 is configured to output the multimedia information of the second device.

For example, the multimedia information processing apparatus 1200 shown in FIG. 12 may be further configured to implement any multimedia information processing method shown in FIG. 2 or FIG. 10. Details are not listed herein again.

Optionally, functions of the control module 1201, the display module 1202, the timing module 1203, and the AI detection module 1204 shown in FIG. 12 may be implemented by using the processing module 1102 in FIG. 11.

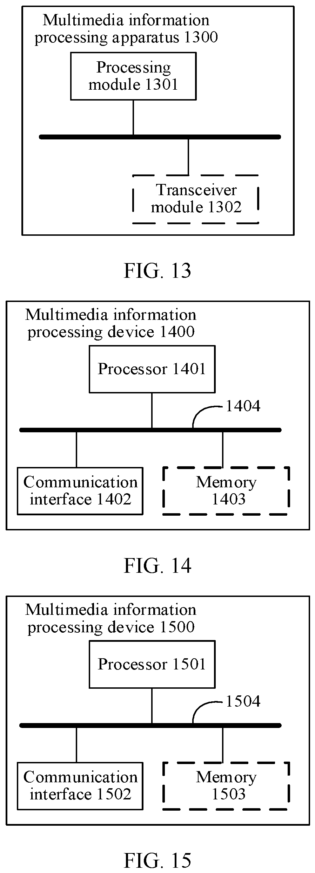

FIG. 13 is a schematic diagram of a structure of a multimedia information processing apparatus 1300. The multimedia information processing apparatus 1300 can implement a function of the first device in the method provided in embodiments of this application. The multimedia information processing apparatus 1300 may be a hardware structure, a software module, or a combination of a hardware structure and a software module. The multimedia information processing apparatus 1300 may be implemented by a chip system. In this embodiment of this application, the chip system may include a chip, or may include a chip and another discrete device.

The multimedia information processing apparatus 1300 may include a processing module 1301. Optionally, the multimedia information processing apparatus 1300 further includes a transceiver module 1302. The transceiver module 1302 is an optional module, and is shown in a dashed-line box in FIG. 13.

The processing module 1301 may be configured to perform S1002 to S 1004 in the embodiment shown in FIG. 10, and may be further configured to support another process of the technology described in this specification. The transceiver module 1302 is used by the multimedia information processing apparatus 1300 to communicate another module. The transceiver module 1302 may be a circuit, a device, an interface, a bus, a software module, a transceiver, or any other apparatus that can implement communication.

The transceiver module 1302 may be configured to perform S1001 in the embodiment shown in FIG. 10, and may be further configured to support another process of the technology described in this specification.

Optionally, the processing module 1302 may be configured to implement functions of the control module 1201, the display module 1202, the timing module 1203, and the AI detection module 1204 shown in FIG. 12.

All related content of the steps in the foregoing method embodiments may be cited in function descriptions of corresponding functional modules. Details are not described herein again.

Module division in embodiments of this application is an example, and is merely logical function division. In actual implementation, there may be another division manner. In addition, the functional modules in embodiments of this application may be integrated into one processor, each of the modules may exist alone physically, or two or more modules may be integrated into one module. The integrated module may be implemented in a form of hardware, or may be implemented in a form of a software functional module.

FIG. 14 shows a multimedia information processing device 1400 according to an embodiment of this application. The multimedia information processing device 1400 may be the first device in the embodiment shown in FIG. 2, can implement a function of the first device in the embodiment shown in FIG. 2 in this application, or can implement a function of the multimedia information processing apparatus shown in FIG. 11 or FIG. 12. The multimedia information processing device 1400 may be a chip system. In this embodiment of this application, the chip system may include a chip, or may include a chip and another discrete device.

The multimedia information processing device 1400 includes at least one processor 1401, configured to implement or configured to support implementation of the function of the first device in FIG. 2 in this application. For example, the processor 1401 may output multimedia information from a second device, and stop outputting the multimedia information if a person in a first range meets a set condition. For details, refer to the detailed descriptions in the method examples. Details are not described herein again.

The multimedia information processing device 1400 may further include a communication interface 1402, configured to communicate with another device through a transmission medium, so that the multimedia information processing device 1400 communicates with the another device. For example, the another device may be a server. The processor 1401 may send and receive data through the communication interface 1402.

The multimedia information processing device 1400 may further include at least one memory 1403, configured to store program instructions and/or data. The memory 1403 is coupled to the processor 1401. The coupling in this embodiment of this application is an indirect coupling or a communication connection between apparatuses, units, or modules, may be in an electrical, mechanical, or another form, and is for information exchange between the apparatuses, the units, or the modules. The processor 1401 may operate in collaboration with the memory 1403. The processor 1401 may execute the program instructions stored in the memory 1403. At least one of the at least one memory 1403 may be included in the processor 1401. When executing the program instructions in the memory 1403, the processor 1401 may implement any multimedia information processing method in the embodiment shown in FIG. 2.

In an example, the memory 1403 in FIG. 14 is an optional part, and is shown in a dashed-line box in FIG. 14.

A specific connection medium between the communication interface 1402, the processor 1401, and the memory 1403 is not limited in this embodiment of this application. In this embodiment of this application, in FIG. 14, the communication interface 1402, the processor 1401, and the memory 1403 are connected through a bus 1404. The bus is represented by a bold line in FIG. 14. A connection manner between other components is merely an example for description, and is not limited thereto. The bus may be classified into an address bus, a data bus, a control bus, and the like. For ease of representation, only one bold line is used to represent the bus in FIG. 14, but this does not mean that there is only one bus or only one type of bus.

In this embodiment of this application, the processor 1401 may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be performed by a hardware processor, or may be performed by a combination of hardware in the processor and a software module.

In this embodiment of this application, the memory 1403 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that is accessible by a computer, but is not limited thereto. The memory in this embodiment of this application may alternatively be a circuit or any other apparatus that can implement a storage function, and is configured to store program instructions and/or data.

FIG. 15 shows a multimedia information processing device 1500 according to an embodiment of this application. The multimedia information processing device 1500 may be the first device in the embodiment shown in FIG. 10, can implement a function of the first device in the embodiment shown in FIG. 10, can implement a function of the multimedia information processing apparatus shown in FIG. 12, or can implement a function of the multimedia information processing apparatus shown in FIG. 13. The multimedia information processing device 1500 may be a chip system. In this embodiment of this application, the chip system may include a chip, or may include a chip and another discrete device.

The multimedia information processing device 1500 includes at least one processor 1501, configured to implement or configured to support the multimedia processing device 1500 in implementing the function of the first device in FIG. 10. For example, the processor 1501 may output projection information from a second device, and if the processor 1501 determines that projection is paused, stop outputting the projection information. For details, refer to the detailed descriptions in the method examples. Details are not described herein again.

The multimedia information processing device 1500 further includes a communication interface 1502, configured to communicate with another device through a transmission medium, so that the multimedia processing device 1500 communicates with the another device. For example, the another device may be a server. The processor 1501 may send and receive data through the communication interface 1502.

Optionally, the multimedia processing device 1500 may further include at least one memory 1503, configured to store program instructions and/or data. In FIG. 15, a dashed-line box is used to show that the memory 1503 is an optional part.

Optionally, in this embodiment of this application, in FIG. 15, the communication interface 1502, the processor 1501, and the memory 1503 are connected through a bus 1504. The bus is represented by a bold line in FIG. 15.

For specific implementations of the processor 1501 and the memory 1503, refer to content described in FIG. 14. Details are not listed herein again.

An embodiment of this application further provides a computer-readable storage medium. The computer-readable storage medium is configured to store a computer program. When the computer program is run on a computer, the computer is enabled to perform the multimedia information processing method in either of the embodiments shown in FIG. 2 and FIG. 10.

An embodiment of this application further provides a computer program product. The computer program product stores a computer program, where the computer program includes program instructions. When the program instructions are executed by a computer, the computer is enabled to perform the multimedia information processing method in either of the embodiments shown in FIG. 2 and FIG. 10.

An embodiment of this application provides a chip system. The chip system includes a processor, and may further include a memory, configured to implement a function of a storage system in the foregoing method. The chip system may include a chip, or may include a chip and another discrete device.

All or some of the methods provided in embodiments of this application may be implemented by software, hardware, firmware, or any combination thereof. When software is used to implement embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, an SSD), or the like.

It is clear that a person skilled in the art can make various modifications and variations to this application without departing from the spirit and scope of this application. Therefore, this application is intended to cover these modifications and variations of this application if they fall within the scope of claims of this application and equivalent technologies thereof.

## Claims

1. A multimedia information processing method, comprising:
accessing, by a first device, a first conference, and outputting multimedia information from a second device; and
stopping, by the first device, outputting the multimedia information if a person in a first range meets a set condition, wherein the first range comprises a capture range of a video capture apparatus associated with the first device when the first device accesses the first conference.

2. The method according to claim 1, wherein the set condition comprises:
a quantity of persons in the first range is a first quantity;
some of persons in the first range are not persons scheduled to attend the first conference or none of persons in the first range is a person scheduled to attend the first conference;
duration in which a quantity of persons in the first range is a first quantity reaches first set duration; or
duration in which some of persons in the first range are not persons scheduled to attend the first conference or none of persons in the first range is a person scheduled to attend the first conference reaches first set duration.

3. The method according to claim 1 or 2, wherein the method further comprises:
if the first device determines, based on a video that is in the first range and that is captured by the video capture apparatus associated with the first device, that the person in the first range does not meet the set condition, resuming, by the first device, outputting the multimedia information.

4. The method according to any one of claims 1 to 3, wherein the method further comprises:
if noise in a capture range of an audio capture apparatus associated with the first device reaches an upper limit of noise, skipping, by the first device, sending, to the second device, audio information captured by the audio capture apparatus associated with the first device.

5. The method according to any one of claims 1 to 4, wherein the method further comprises:
if duration in which the first device stops outputting the multimedia information reaches second set duration, exiting, by the first device, the first conference; or
if duration in which the person in the first range meets the set condition reaches second set duration, exiting, by the first device, the first conference.

6. The method according to any one of claims 1 to 5, wherein the method further comprises:
capturing, by the first device, the video in the first range by using the video capture apparatus associated with the first device; and
determining, by the first device, that a quantity of human bodies comprised in the video is the quantity of persons in the first range.

7. The method according to claim 6, wherein the video capture apparatus associated with the first device comprises a first video capture apparatus and a second video capture apparatus, a capture range of the second video capture apparatus is larger than a capture range of the first video capture apparatus, and the determining, by the first device, that a quantity of human bodies comprised in a first video is the quantity of persons in the first range comprises:
if the quantity of human bodies comprised in the first video is the first quantity, determining, by the first device, that a quantity of human bodies comprised in a second video that is in the first range and that is captured by the second video capture apparatus is the quantity of persons in the first range, wherein the first video is a video that is in the first range and that is captured by the first video capture apparatus.

8. The method according to any one of claims 1 to 7, wherein the first device pre-stores an identifier of a third device, the third device is a device associated with the person scheduled to attend the first conference, and the method comprises:
sending, by the first device, a message to the third device in a short-range communication manner, wherein the message is for requesting to obtain the identifier of the third device; and
the stopping, by the first device, outputting the multimedia information if a person in a first range meets a set condition comprises:
if the person in the first range meets the set condition and the identifier of the third device is not received, stopping, by the first device, outputting the multimedia information.

9. The method according to any one of claims 1 to 8, wherein the method further comprises:
outputting, by the first device, projection information from a fourth device; and
after exiting the first conference, determining, by the first device based on the video captured by the video capture apparatus associated with the first device, that projection is paused, and stopping, by the first device, outputting the projection information from the fourth device.

10. A multimedia information processing apparatus, comprising:
a transceiver module, configured to access a first conference; and
a processing module, configured to: output multimedia information from a second device, and stop outputting the multimedia information if a person in a first range meets a set condition, wherein the first range comprises a capture range of a video capture apparatus associated with a first device when the first device accesses the first conference.

11. A multimedia information processing device, comprising a processor and a memory, wherein the memory is configured to store one or more computer programs, the one or more computer programs comprise computer-executable instructions, and when the multimedia information processing device runs, the processor executes the one or more computer programs stored in the memory, to enable the multimedia information processing device to perform the method according to any one of claims 1 to 9.

12. A computer-readable storage medium, wherein the computer-readable storage medium is configured to store a computer program, and when the computer program is run on a computer, the computer is enabled to perform the method according to any one of claims 1 to 9.
